(19) Europäisches Patentamt

European Patent Office

Office européen des brevets

(11) **EP 4 741 771 A1**

(12) **EUROPEAN PATENT APPLICATION**

(43) Date of publication:
13.05.2026 Bulletin 2026/20

(51) International Patent Classification (IPC):
*G01D 5/14* (2006.01)     *G01D 3/08* (2006.01)

(21) Application number: 25207364.8

(22) Date of filing: 07.10.2025

(52) Cooperative Patent Classification (CPC):
**G01D 5/145; G01D 3/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 07.11.2024 US 202418939931

(71) Applicant: Allegro MicroSystems, LLC
Manchester, NH 03103 (US)

(72) Inventors:
• **GRINBERG, German**
 **1225 Buenos Aires (AR)**
• **MARTIN PIRCHIO, Franco Noel**
 **1431 Buenos Aires (AR)**
• **CESARETTI, Juan Manuel**
 **C1425FYF Buenos Aires (AR)**
• **INTILE, Lucas**
 **1426 Buenos Aires (AR)**

(74) Representative: **South, Nicholas Geoffrey et al**
**Venner Shipley LLP**
**200 Aldersgate**
**London EC1A 4HD (GB)**

(54) **SYSTEMS AND METHODS FOR ERROR CHECKING IN MAGNETIC FIELD SENSING APPLICATIONS**

(57) Disclosed are example systems and methods for error checking in magnetic field sensing applications. In particular, described are example systems and methods for error checking in magnetic field sensors used for determining a rotation angle of an object that rotates. In some embodiments, a plurality of signals representative of a magnetic field generated by a magnetic target may be received. The plurality of signals may be combined to determine a value, and a determination made as to whether the determined value is an expected value. When the determined value is not an expected value, an output signal representing an error may be output.

EP 4 741 771 A1

**Description**

**BACKGROUND**

Various standards have been developed to classify risk and define safety requirements, such as the Safety Integrity Level (SIL) used in the International Electrotechnical Commission (IEC) standard 61508. This standard has been adapted to the road vehicle industry specifically, namely as Automotive Safety Integrity Level (ASIL) defined by the International Organization for Standardization (ISO) standard 26262. The highest classification of injury risk that requires the most stringent level of safety measures is ASIL-D, required for safety critical automotive applications such as automotive control systems.

Sensor devices are often used to monitor parameters of a system. For example, sensor devices may be used to measure an angle of rotation of a rotation object, such as of a rotor of an electric motor. The measured angle information may then be used to control the motor. For example, a controller may continuously receive a measured angle of rotation of the rotor, and may use this information to commutate the motor. That is, the measured angle information may be used by the controller to switch currents in motor windings, producing magnetic fields that cause the rotor to rotate. The controller can then control aspects of the motor, such as speed and torque, based on the measured angle information. Sensor devices are also used in some safety critical automotive applications, such as in detecting the angle of rotation of an automobile steering column relative to its neutral position to signal an electric power steering system that assists in wheel turning. Numerous applications in industries, spanning from industrial automation and robotics, to electronic power steering and motor position sensing, may require monitoring of a rotation angle of a rotating shaft.

**SUMMARY**

Disclosed are example systems and methods for error checking in magnetic field sensing applications. In particular, described are example systems and methods for error checking in magnetic field sensors used for determining a rotation angle of an object that rotates. In some embodiments, a plurality of signals representative of a magnetic field generated by a magnetic target may be received. The magnetic target may be the object that rotates (if magnetic) or a magnet attached to the object and that rotates with the object. The plurality of signals may be combined to determine a value, and a determination made as to whether the determined value is an expected value. When the determined value is not an expected value, an output signal representing an error may be output.

In accordance with some embodiments, there is provided a method of identifying an error in measuring a characteristic of a target. The method comprises receiving, by electronic circuitry, a plurality of signals representative of a magnetic field generated by the target. The method also comprises combining, by the electronic circuitry, the plurality of signals to determine a value, and determining, by the electronic circuitry, whether the value is an expected value. The method further comprises outputting, by the electronic circuitry, an output signal representing an error when the value is not the expected value.

In some embodiments, the plurality of signals represents signals output from differentially coupled pairs of magnetic field sensing elements.

In further embodiments, the plurality of signals comprises three signals, each of the three signals being a channel signal representing signals output from a differentially coupled pair of magnetic field sensing elements.

In still further embodiments, a first signal of the plurality of signals is a first channel ($CH_1$) signal representing signals output from a first pair of differentially coupled magnetic field sensing elements, a second signal of the plurality of signals is a second channel ($CH_2$) signal representing signals output from a second pair of differentially coupled magnetic field sensing elements, and a third signal of the plurality of signals is a third channel ($CH_3$) signal representing signals output from a third pair of differentially coupled magnetic field sensing elements.

In some embodiments, combining the plurality of signals to determine the value comprises combining the plurality of signals according to the formula

$$CH_1 - CH_2 + CH_3 = X1$$

where X1 is the value and is expected to be zero.

In further embodiments, determining whether the value is the expected value comprises determining whether X1 is above a threshold value for a predetermined time.

In still further embodiments, combining the plurality of signals to determine the value comprises combining the plurality of signals according to the formula

$$CH_1{}^2 + CH_2{}^2 + CH_3{}^2 = X2$$

where X2 is the value and is expected to be constant over time.

In some embodiments, determining whether the value is the expected value comprises determining whether X2 varies beyond a threshold amount for a predetermined time.

In further embodiments, combining the plurality of signals to determine the value comprises combining the plurality of signals according to the formula

$$B_{IN} = \frac{1}{3} \times \sqrt{\left(\frac{\sqrt{3}}{2}(CH_2 + CH_3)\right)^2 + \left(CH_1 + \frac{1}{2}(CH_2 - CH_3)\right)^2}$$

where $B_{IN}$ is the value and is proportional to a magnitude of the magnetic field generated by the target.

In still further embodiments, determining whether the value is the expected value comprises determining whether $B_{IN}$ deviates from an expected $B_{IN}$ for a predetermined time.

In some embodiments, combining the plurality of signals to determine the value comprises summing the plurality of signals.

In further embodiments, determining whether the value is an expected value comprises determining whether the value is within a threshold amount of zero for a predetermined time.

In still further embodiments, determining whether the value is an expected value comprises determining whether the value is within a threshold amount of a constant value for a predetermined time.

Furthermore, in accordance with some embodiments, there is provided a system comprising electronic circuitry. The electronic circuitry is configured to receive a plurality of signals representative of a magnetic field generated by a target. The electronic circuitry is also configured to combine the plurality of signals to determine a value, and to determine whether the value is an expected value. The electronic circuitry is further configured to output an output signal representing an error when the value is not the expected value.

In some embodiments, the system further comprises at least six magnetic field sensing elements.

In further embodiments, the magnetic field sensing elements are Hall-effect plate sensing elements.

In still further embodiments, the at least six magnetic field sensing elements comprise three pairs of differentially coupled magnetic field sensing elements.

In some embodiments, the plurality of signals represents signals output from differentially coupled pairs of magnetic field sensing elements.

In further embodiments, the plurality of signals comprises three signals, each of the three signals being a channel signal representing signals output from a differentially coupled pair of magnetic field sensing elements.

In still further embodiments, a first signal of the plurality of signals is a first channel ($CH_1$) signal representing signals output from a first pair of differentially coupled magnetic field sensing elements, a second signal of the plurality of signals is a second channel ($CH_2$) signal representing signals output from a second pair of differentially coupled magnetic field sensing elements, and a third signal of the plurality of signals is a third channel ($CH_3$) signal representing signals output from a third pair of differentially coupled magnetic field sensing elements.

In some embodiments, combining the plurality of signals to determine the value comprises combining the plurality of signals according to the formula

$$CH_1 - CH_2 + CH_3 = X1$$

where X1 is the value and is expected to be zero.

In further embodiments, determining whether the value is the expected value comprises determining whether X1 varies beyond a threshold amount for a predetermined time.

In still further embodiments, combining the plurality of signals to determine the value comprises combining the plurality of signals according to the formula

$$CH_1{}^2 + CH_2{}^2 + CH_3{}^2 = X2$$

where X2 is the value and is expected to be constant value over time.

In some embodiments, determining whether the value is the expected value comprises determining whether X2 varies beyond a threshold amount for a predetermined time.

In further embodiments, combining the plurality of signals to determine the value comprises combining the plurality of signals according to the formula

$$B_{IN} = \frac{1}{3} \times \sqrt{\left(\frac{\sqrt{3}}{2}(CH_2 + CH_3)\right)^2 + \left(CH_1 + \frac{1}{2}(CH_2 - CH_3)\right)^2}$$

where $B_{IN}$ is the value and is proportional to a magnitude of the magnetic field generated by the target.

In still further embodiments, determining whether the value is the expected value comprises determining whether $B_{IN}$ deviates from an expected $B_{IN}$ for a predetermined time.

In some embodiments, the electronic circuitry further comprises voltage adder circuitry, the voltage adder circuitry combining the plurality of signals to determine the value.

In further embodiments, the voltage adder circuitry comprises one or more of an operational amplifier circuit, a switched capacitor circuit, or a current mirror circuit.

In still further embodiments, the electronic circuitry further comprises module calculation circuity, the module calculation circuitry combining the plurality of signals to determine the value.

In some embodiments, the module calculation circuitry comprises one or more of a voltage multiplier circuit, a Gilbert cell circuit, an analog-to-digital conversion circuit, or a digital signal processing circuit.

In further embodiments, the electronic circuitry further comprises a memory storing instructions and a processor. The processor, when executing the instructions, is configured to receive the plurality of signals. The processor, when executing the instructions, is also configured to combine the plurality of signals to determine the value, and determine whether the value is the expected value. The processor, when executing the instructions, is further configured to output the output signal representing the error when the value is not the expected value.

In still further embodiments, combining the plurality of signals to determine the value comprises summing the plurality of signals.

In some embodiments, determining whether the value is an expected value comprises determining whether the value is within a threshold amount of zero for a predetermined time.

In further embodiments, determining whether the value is an expected value comprises determining whether the value is within a threshold amount of a constant value for a predetermined time.

Before explaining example embodiments consistent with the present disclosure in detail, it is to be understood that the disclosure is not limited in its application to the details of constructions and to the arrangements set forth in the following description or illustrated in the drawings. The disclosure is capable of being practiced and carried out in various ways. Also, it is to be understood that the phraseology and terminology employed herein, as well as in the abstract, are for the purpose of description and should not be regarded as limiting.

It is to be understood that both the foregoing general description and the following detailed description are explanatory only and are not restrictive of the claimed subject matter.

**BRIEF DESCRIPTION OF THE DRAWINGS**

The accompanying drawings are incorporated in and constitute part of this specification. The drawings, together with the description, illustrate and serve to explain the principles of various example embodiments of the disclosure.

FIG. 1 shows an example system with an on-axis arrangement for detecting rotation angles of a target.

FIG. 2 shows a diagram of a magnet and four magnetic field sensing elements arranged equiangularly around a circle in a sensing plane.

FIG. 3A shows an example placement of four magnetic field sensing elements around a circle.

FIG. 3B shows an example placement of five magnetic field sensing elements around a circle.

FIG. 3C shows an example placement of six magnetic field sensing elements around a circle.

FIG. 4 shows simulations of example signals generated from magnetic field sensing elements that represent a magnetic field as a target rotates.

FIG. 5A shows a block diagram of example sensing circuitry, consistent with embodiments of the present disclosure.

FIG. 5B shows a block diagram of another example sensing circuitry, consistent with embodiments of the present disclosure.

FIG. 6 shows a block diagram with an example of sensing circuitry and monitoring circuitry, consistent with embodiments of the present disclosure.

FIG. 7 shows an example circuit for implementing monitoring circuitry for one monitor, consistent with embodiments of the present disclosure.

FIG. 8A shows a block diagram of example digital monitoring circuitry, consistent with embodiments of the present disclosure.

FIG. 8B shows a block diagram of an example system with a sensor device, consistent with embodiments of the present disclosure.

FIG. 9 shows an example process for determining whether an error condition has occurred in measuring a characteristic of a target, and for outputting a signal representing the error condition when the error condition has occurred, consistent with embodiments of the present disclosure.

FIG. 10 shows an example computing environment, consistent with embodiments of the present disclosure.

FIG. 11 shows an example computing device, consistent with embodiments of the present disclosure.

The drawings are not necessarily to scale, or inclusive of all elements of a system, emphasis instead generally being placed upon illustrating the concepts, structures, and techniques sought to be protected herein.

## DETAILED DESCRIPTION

Reference will now be made in detail to the embodiments of the disclosure, certain examples of which are illustrated in the accompanying drawings.

In the following description, numerous specific details are set forth regarding the systems and methods of the disclosed subject matter, and the environment in which such systems and methods operate, to provide a thorough understanding of the disclosed subject matter. After reading the descriptions provided herein, it will be apparent to one skilled in the art, however, that the disclosed subject matter may be practiced without such specific details. It will also be apparent to one skilled in the art that certain features, which are well known within the art, are not described in detail to avoid unnecessary complication of the description of the systems and methods described herein. In addition, it will be understood that the embodiments provided below are examples, and that it is contemplated that there are other systems and methods that are within the scope of the subject matter disclosed herein.

A magnetic field sensor device may be used to determine a rotation angle of a rotation object. With a magnetic field sensor device, one or more elements of the sensor device that are responsive to a magnetic field may be positioned near a rotation object and may either directly detect a magnetic field generated by the rotation object (e.g., if the rotation object is magnetized) or detect a magnetic field of a magnet attached to the rotation object.

An object monitored by a sensor device is often referred to as a target. Accordingly, an object whose characteristics are sensed by the sensor device, such as a magnet or magnetized rotation object, may be referred to as a "target" herein.

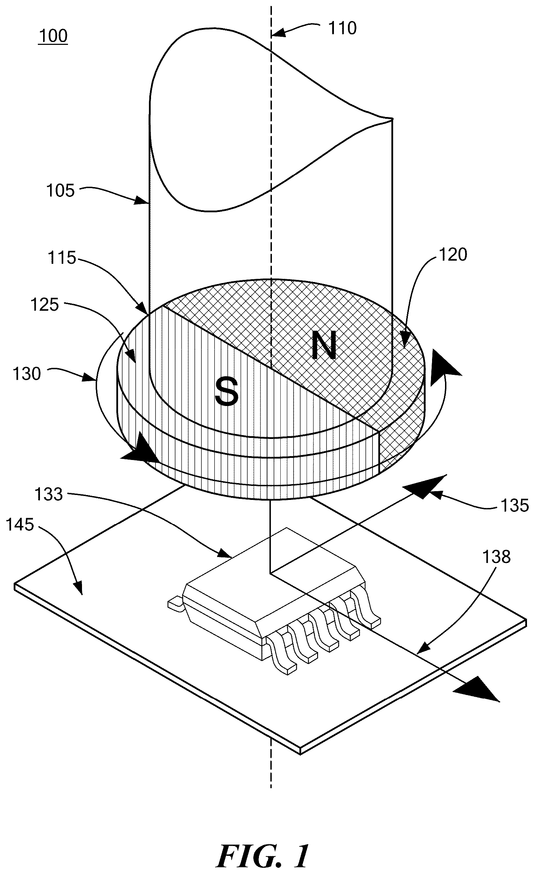

FIG. 1 shows an example system 100 that may be used to measure a rotation angle of a rotation object in accordance with example embodiments of the disclosure. In system 100, the rotation object comprises a shaft (e.g., shaft 105 of system 100), such as a rotor, and the rotation object is illustrated as rotating around an axis (e.g., axis 110 of system 100). The rotation object can rotate around an axis clockwise or counterclockwise, or can rotate clockwise at some times and counterclockwise at other times. In FIG. 1, arrow 130 illustrates a counterclockwise rotation of the rotation object about the axis, when viewed along the axis of rotation (e.g., axis 110 of FIG. 1). Although FIG. 1 illustrates an example system where a shaft or rotor rotates, the disclosure is not so limited. A person of ordinary skill in the art would recognize that magnetic field sensor devices may be used to detect a rotation angle of any object that rotates, not just shafts or rotors, so long as that object is magnetized or has a magnet attached to it. In some embodiments, the rotation object may rotate 360 degrees. In other embodiments, a rotation object may oscillate or rotate back and forth without making a full rotation.

In some embodiments, a rotation object (e.g., rotation object 105) may be magnetized, such that a magnetic field sensor device may sense a magnetic field generated by the rotation object. Alternatively, a magnet may be attached to a rotation object and the magnet may generate a magnetic field, allowing for detection of the magnetic field by a magnetic field sensor device. The magnet may be attached such that the magnet rotates with the rotation object. For example, FIG. 1 illustrates an example system 100 where a magnet 115 (e.g., disc magnet, ring magnet) has been positioned near an end (e.g., bottom) of rotation object 105. However, the disclosure is not so limited. As one alternative example, a magnet may be positioned near another end (e.g., top) of rotation object 105. In some embodiments, the magnet may be physically attached to a top or bottom of the rotation object.

In example system 100 of FIG. 1, magnet 115 is shown as being a diametrically magnetized disc magnet with a north pole 120 and a south pole 125. However, the disclosure is not limited to this example. A person of ordinary skill in the art would recognize that any form factor of magnet may be used, including, for example, disc magnets, ring magnets, bar magnets, horseshoe magnets, cylinder magnets, or any other form factor of a magnet.

A person of ordinary skill in the art would also recognize that a magnet (e.g., magnet 115 of FIG. 1) may be a permanent magnet that stays magnetized once magnetized, a temporary magnet that behaves like a magnet only when near a magnetic field, an electromagnet that behaves like a magnet only when electricity is applied, or any other type of magnet. A person of ordinary skill in the art would recognize that a magnet (e.g., magnet 115 of FIG. 1) may be made of any type of magnetic material, such as neodymium (e.g., neodymium-iron-boron (NdFeB)), samarium cobalt (e.g., SmCo), alnico (e.g., aluminum, nickel, cobalt), ceramic or ferrite (e.g., strontium carbonate, iron oxide), or any other type of magnetic material. Although magnet 115 in FIG. 1 is illustrated as being diametrically magnetized, the disclosure is not so limited. A magnet (e.g., magnet 115 of FIG. 1) used in a system (e.g., system 100 of FIG. 1) may, for example, instead be axially magnetized. And although magnet 115 in FIG. 1 shows one north pole 120 and one south pole 125, the disclosure is not so limited. A person of ordinary skill in the art would recognize that a magnet (e.g., magnet 115 of FIG. 1) may have any number of north and south poles.

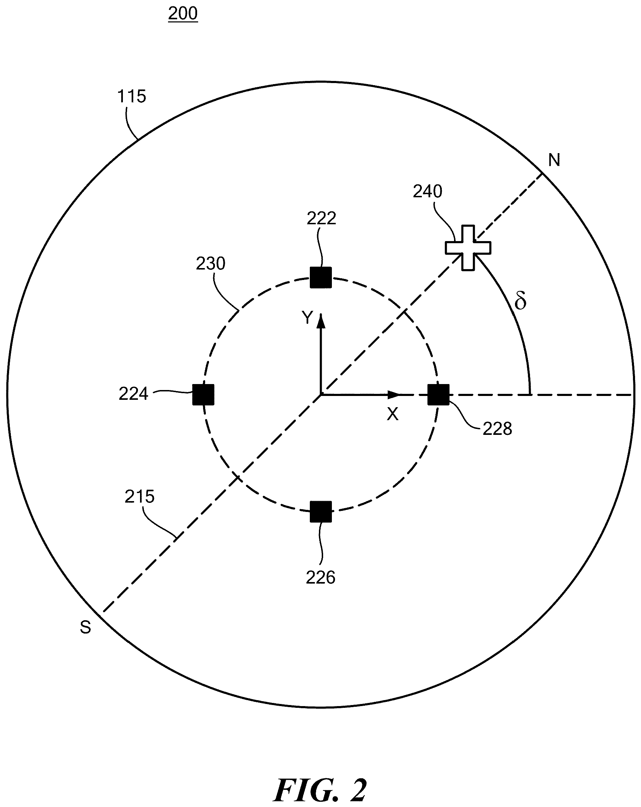

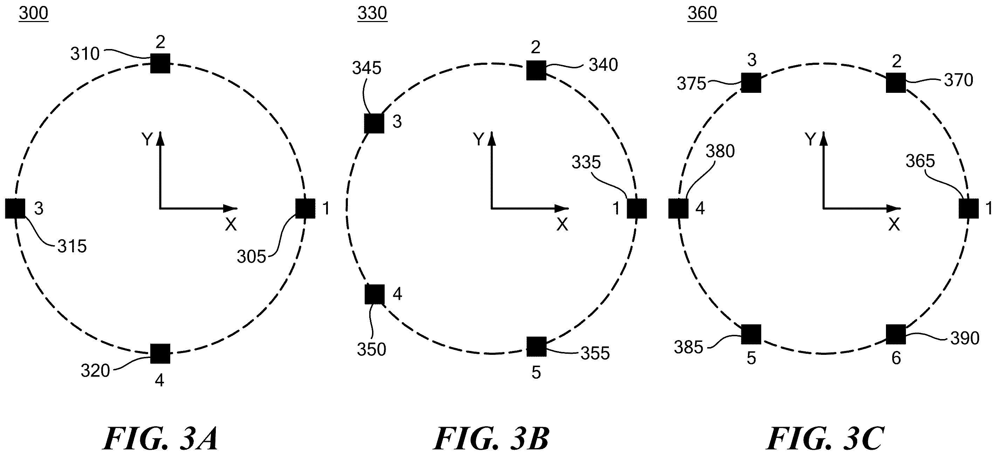

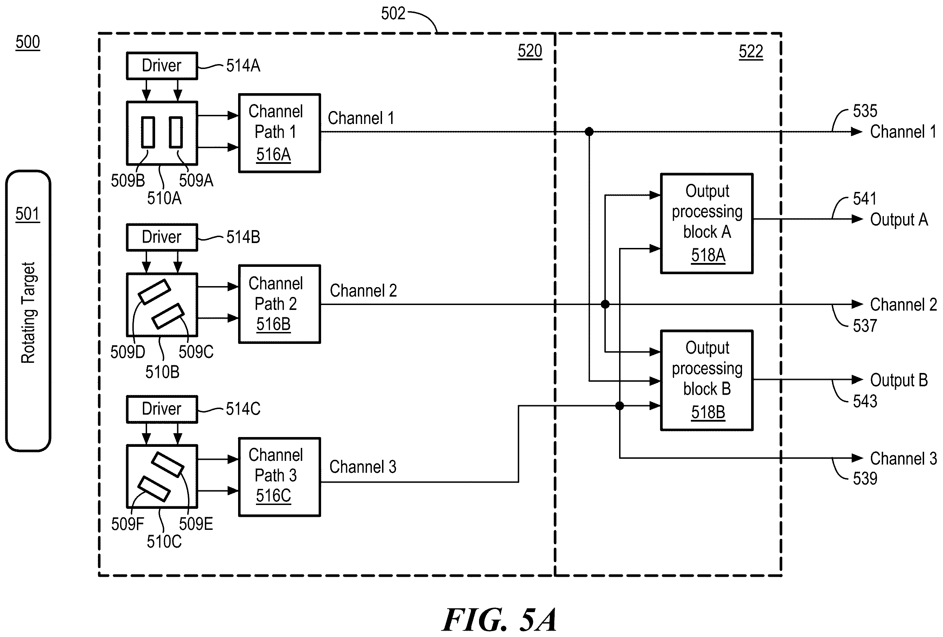

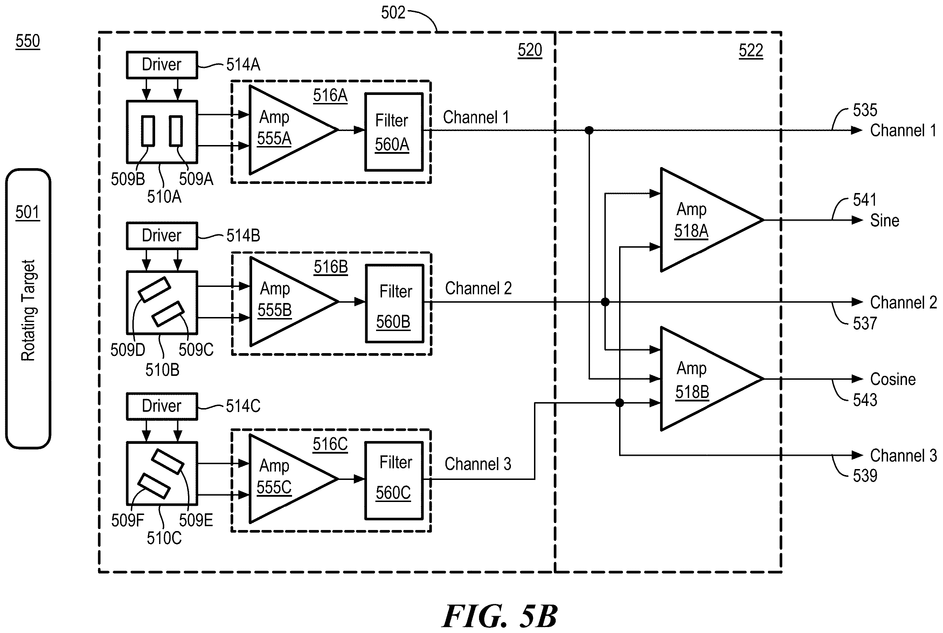

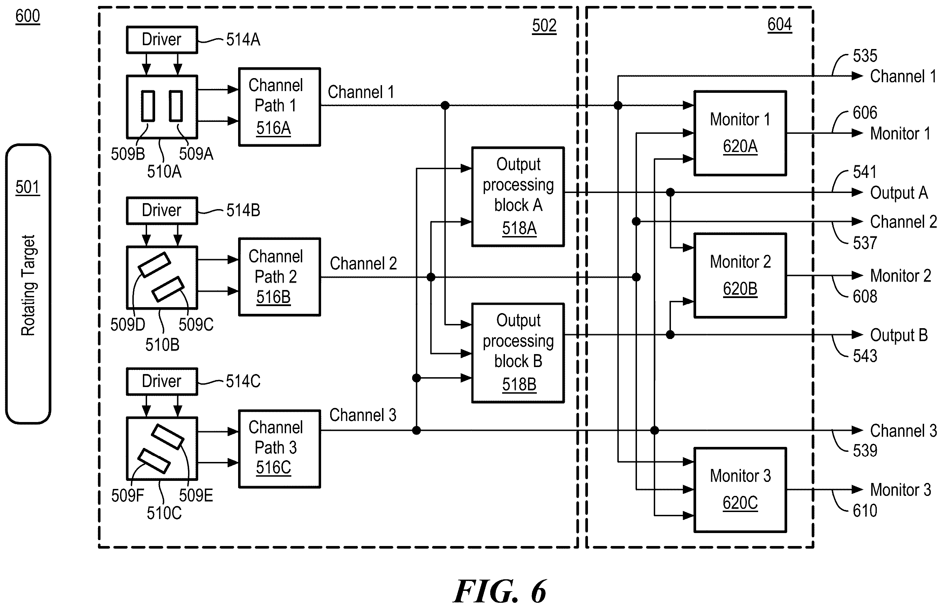

One or more magnetic field sensing elements (see, e.g., magnetic field sensing elements 222, 224, 226, 228 of FIG. 2, magnetic field sensing elements 305, 310, 315, 320 of FIG. 3A, magnetic field sensing elements 335, 340, 345, 350, 355 of FIG. 3B, magnetic field sensing magnetic field sensing elements 365, 370, 375, 380, 385, 390 of FIG. 3C, magnetic field sensing elements 509A, 509B, 509C, 509D, 509E, 509F of FIGs. 5A, 5B, 6A, 6B) for sensing a magnetic field of a target may be positioned near the target. In example system 100 of FIG. 1, for example, a sensor device in a package 133 (e.g., integrated circuit) including one or more magnetic field sensing elements is positioned near target 115. System 100 of FIG. 1 is an example of an on-axis (e.g., end-of-shaft) arrangement, in that the one or more magnetic field sensing elements in package 133 are aligned along the rotation axis (e.g., axis 110) of the target (e.g., magnet 115). Package 133 may be positioned near target 115 by positioning package 133 on or mounting package 133 to a surface 145, such as a printed circuit board (PCB) or other surface, near target 115.

If system 100 of FIG. 1 were mapped to X, Y, and Z axes in a Cartesian coordinate system, axis 135 may be thought of as an X axis, axis 138 may be thought of as a Y-axis, and axis 110 may be thought of as a Z axis. In some embodiments, one or more magnetic field sensing elements in the sensor device in package 133 are arranged in a plane so as to be maximally sensitive to the magnetic field along the Z axis.

In addition to including one or more magnetic field sensing elements, a package (e.g., package 133 of FIG. 1) may also include additional circuitry (see, e.g., FIGs. 5A, 5B, 6, 7, 8A, 8B) for conditioning and/or processing signals representing the magnetic field generated by the one or more magnetic field sensing elements. Although FIG. 1 illustrates the one or more magnetic field sensing elements and additional circuitry as being included in a package 133, the disclosure is not so limited. A person of ordinary skill in the art would recognize, for example, that the one or more magnetic field sensing elements and any additional circuitry may be mounted as separate components on a PCB, for example. Alternatively, some components may be included in a package, while other components may be external to the package.

In some embodiments, the one or more magnetic field sensing elements may include magnetic field sensing elements arranged in a sensing plane about a center (see, e.g., FIGs. 2, 3A-3C). Each of the magnetic field sensing elements may be used to measure magnetic field strength. In some embodiments, the output of the magnetic field sensing elements may be processed and/or conditioned. The processed and/or conditioned signals may be referred to as channels, with one channel corresponding to the processed and/or conditioned signal output from one or more of the magnetic field sensing elements, and one or more other channels corresponding to the processed and/or conditioned signal output from one or more others of the magnetic field sensing elements.

In response to the magnetic field generated by the target (e.g., target 115), the magnetic field sensing elements may each output a voltage that is proportional to the magnitude of the magnetic field as sensed by the sensor device. The output voltage may vary as the target rotates due to changes in the magnetic field of the target detected by the magnetic field sensing elements. When the magnetic field is sensed over a rotation of 360 degrees, the voltage output from one of the magnetic field sensing elements may appear as a sine curve over the 360 degrees and the voltage output from another of the magnetic field sensing elements may appear as a cosine curve over the 360 degrees. In some embodiments, the voltages output from multiple magnetic field sensing elements may be conditioned and/or processed to result in a signal resembling a sine curve over 360 degrees of rotation of the target, and the voltages output from multiple magnetic field sensing elements may be conditioned and/or processed to result in a signal resembling a cosine curve over 360 degrees of rotation of the target. In the example shown in FIG. 1, there is only one pole pair for an entire 360 degree rotation of the rotation object, so a period of the sine curve and cosine curve may correspond to a complete 360 degree rotation of the rotation object. However, as discussed above, the disclosure is not so limited and a target may have multiple pole pairs, in which case a rotation of the target that causes one pole pair to pass by a sensor device may correspond to a measured 360 degrees of rotation of the target, and a period of the sine curve and a period of the cosine curve may correspond to a rotation of the target that causes one pole pair to pass by a sensor device.

FIG. 2 shows a diagram 200 of a target 115 and four magnetic field sensing elements, magnetic sensing elements 222, 224, 226, 228, arranged equiangularly around a circle 230 in a sensing plane. An example coordinate system is provided in diagram 200, with the positive X axis toward the right and the positive Y axis toward the top of the diagram. A positive Z axis (not shown) is out of the figure toward the reader. In some embodiments, the positive X axis may be chosen as a neutral (or 0 degree angle of rotation) position of target 115.

An axis of magnetization 215 between the north pole and the south pole of the magnet may be offset from its neutral position along the X axis due to a rotation of target 115 about its axis of rotation (i.e., the Z axis) by an angle $\delta$. Angle of rotation $\delta$ may be determined using signals output from magnetic field sensing elements. In the example of FIG. 2, angle of rotation $\delta$ may be determined using the signals output from four magnetic field sensing elements 222, 224, 226, 228.

A magnetic field sensing element may be any type of element sensitive to a magnetic field. For example, a magnetic field sensing element may be a Hall-effect element, a magnetoresistance element, or a magnetotransistor element. For example, a magnetic field sensing element may be a Hall-effect element such as a planar Hall element, a vertical Hall element, or a circular vertical Hall (CVH) element. A magnetic field sensing element may instead be a magnetoresistance element, such as an Indium Antimonide (InSb) element, a giant magnetoresistance (GMR) element (e.g., a spin valve element), an anisotropic magnetoresistance (AMR) element, a tunneling magnetoresistance (TMR) element, or a magnetic tunnel junction (MTJ) element. A magnetic field sensing element may be a receiving coil field sensing element. A magnetic field sensing element may be a single element, or alternatively may include two or more magnetic field sensing elements arranged in one of various configurations, such as a half bridge or full (Wheatstone) bridge. Depending on the type of sensor device and application requirements, a magnetic field sensing element may be a device made of a type IV semiconductor material such as Silicon (Si) or Germanium (Ge), or of a type III-V semiconductor material such as Gallium-Arsenide (GaAs) or an Indium compound such as Indium-Antimonide (InSb). In some embodiments, multiple magnetic field sensing elements in a sensor device may be of the same type of magnetic field sensing element. In some embodiments, there may be different types of magnetic field sensing elements that work together in a sensor device.

As is known, some of the above-described magnetic field sensing elements tend to have an axis of maximum sensitivity parallel to a substrate that supports the magnetic field sensing element, and others of the above-described magnetic field sensing elements tend to have an axis of maximum sensitivity perpendicular to a substrate that supports the magnetic field sensing element. In particular, planar Hall elements tend to have axes of maximum sensitivity perpendicular to a substrate, while metal based or metallic magnetoresistance elements (e.g., GMR, TMR, AMR, spin-valve) and vertical Hall elements tend to have axes of maximum sensitivity parallel to a substrate.

Magnetic field sensing elements 222, 224, 226, 228 may output signals, such as voltages, that are proportional to the magnetic field strength of the magnetic field generated by target 115. In some embodiments, magnetic field sensing elements 222, 224, 226, 228 may be differentially paired. For example, magnetic field sensing elements may be grouped in pairs, such that a difference between outputs of each of the pairs may be determined and output as a differential signal corresponding to the respective pair. Use of differentially-coupled magnetic field sensing elements in a sensor device may allow the sensor device to be immune to stray magnetic fields. For example, any magnetic field strength attributable to the environment, and not to the rotating target, may be sensed by each of the two magnetic field sensing elements in a differentially coupled pair. Because a magnetic field strength attributable to the environment will be approximately equally sensed at the two differentially paired magnetic field sensing elements (given their close proximity), any magnetic field strength measured by magnetic field sensing elements that is attributable to the environment will largely cancel out when a difference is taken between the measurements of the two differentially paired magnetic field sensing elements. That is, common-mode magnetic fields (i.e., common magnetic field strengths sensed by both magnetic field sensing elements in a differential pair) may be canceled out through use of differentially-paired magnetic field sensing elements.

In some embodiments, magnetic field sensing elements 222, 224, 226, 228 of FIG. 2 may be Hall-effect plate elements, and each of these Hall-effect plate elements may be oriented to be maximally sensitive to the strength of the magnetic field in a direction along the Z-axis. That is, the Hall-effect plate elements may be contained in a plane perpendicular to the axis of rotation. Magnetic field sensing elements 222, 224, 226, 228 may also be arranged equiangularly around a circle 230. In an ideal alignment, the center of circle 230 may be aligned along the Z axis with the axis of rotation of target 115. In this arrangement, determination of a rotation angle of a target may be made by weighting signals output by each of the magnetic field sensing elements according to its planar coordinates and summing the results to produce x and y coordinates of a point 240 in a sensor plane. An inverse tangent function (i.e., arctan function) may then be applied to the ratio of the y coordinate over the x coordinate to determine an angle of rotation $\delta$. An analogy may be made to astronomy, where a "center of mass" or "barycenter" around which two or more bodies orbit may be calculated. By analogy, here a magnetic center may be attracted toward a given magnetic field sensing element if it measures a positive magnetic field, or repelled if it measures a negative magnetic field. While the magnetic field sensing elements are placed in front of a rotating target 115, a magnetic center may follow the same rotation as the rotating target. A sensor device may measure the position of this magnetic center and return angular position information. Additional details regarding this "barycenter" approach may be found in U.S. Patent No. 9,797,746, entitled "SYSTEMS AND METHODS FOR DETECTING A MAGNETIC TARGET BY COMPUTING A BARYCENTER" and in U.S. Patent No. 11,733,024, entitled "USE OF CHANNEL INFORMATION TO GENERATE REDUNDANT ANGLE MEASUREMENTS ON SAFETY CRITICAL APPLICATIONS," the disclosures of which are hereby incorporated by reference in their entireties.

One may use different numbers of magnetic field sensing elements to compute the rotation angle $\delta$, provided the sensors are arranged in the sensing plane equiangularly around a circle centered on the axis of rotation. For example, let the variable "n" denote the total number of magnetic field sensing elements, where n is at least three. FIGs. 3A, 3B, and 3C provide example placements of magnetic field sensing elements using the "barycenter" approach where n=4, n=5, and n=6, respectively. In each example, the magnetic field sensing elements are arranged equiangularly around circles. By the word "equiangularly," it is meant that one magnetic field sensing element (magnetic field sensing element #1 305, 335, 365 in FIGs. 3A, 3B, and 3C, respectively) is placed on the positive X axis and the remaining n-1 magnetic field sensing elements are placed so that the angle subtended by the arc between two circumferentially adjacent sensors from the center of the circle is $2\pi/n$ radians or 360/n degrees. That is, assuming a circle of radius 1, a magnetic field sensing element "i" that has position $(x_i, y_i) = (\cos(2\pi(i-1)/n), \sin(2\pi(i-1)/n))$ in the coordinate system of the sensing plane. In practical applications, a radius of the circle may be selected according to the dimensions of the target and the design parameters of the system, so that a component of the magnetic field along the Z axis present at each magnetic field sensing element is strong enough to permit accurate measurement.

With this notation, points along a sine curve corresponding to the y coordinate of the barycenter may be determined as:

$$\text{Equation 1: } sine\ value = \sum_{i=1}^{n} H_i * \sin\left(2\pi\left(\frac{i-1}{n}\right)\right)$$

where *sine value* is the magnitude along the sine curve (or y-coordinate magnitude) for the barycenter for a given angle of rotation, n is the total number of magnetic field sensing elements, i corresponds to a number of one magnetic field sensing element out of the total number of magnetic field sensing elements, and $H_i$ corresponds to the strength of the magnetic field perpendicular to the sensing plane sensed by an ith one of the magnetic field sensing elements. For the diametrically magnetized target (e.g., target 115) of FIG. 1, a full rotation of the target will correspond to a period of the sine curve.

Similarly, points along a cosine curve corresponding to the x coordinate of the barycenter may be determined as:

$$\text{Equation 2: } cosine\ value = \sum_{i=1}^{n} H_i * \cos\left(2\pi\left(\frac{i-1}{n}\right)\right)$$

where *cosine value* is the magnitude along the cosine curve (or x-coordinate magnitude) for the barycenter for a given angle of rotation. For the diametrically magnetized target (e.g., target 115) of FIG. 1, a full rotation of the target will correspond to a period of the cosine curve.

An angle of rotation of the target $\delta$ may then be determined as:

$$\text{Equation 3: } \delta = \tan^{-1}\left(\frac{\sum_{i=1}^{n} H_i*\sin\left(2\pi\left(\frac{i-1}{n}\right)\right)}{\sum_{i=1}^{n} H_i*\cos\left(2\pi\left(\frac{i-1}{n}\right)\right)}\right) = \tan^{-1}\left(\frac{sine\ value}{cosine\ value}\right)$$

FIG. 3A shows an example 300 where four magnetic field sensing elements, magnetic field sensing element #1 305, magnetic field sensing element #2 310, magnetic field sensing element #3 315, and magnetic field sensing element #4 320, are placed equiangularly around a circle. FIG. 3B shows an example 330 where five magnetic field sensing elements, magnetic field sensing element #1 335, magnetic field sensing element #2 340, magnetic field sensing element #3 345, magnetic field sensing element #4 350, and magnetic field sensing element #5 355, are placed equiangularly around a circle. FIG. 3C shows an example 360 where six magnetic field sensing elements, magnetic field sensing element #1 365, magnetic field sensing element #2 370, magnetic field sensing element #3 375, magnetic field sensing element #4 380, magnetic field sensing element #5 385, and magnetic field sensing element #6 390, are placed equiangularly around a circle. As previously discussed, the disclosure herein should not be limited to these examples. As little as three magnetic field sensing elements, and as many magnetic field sensing elements as are desired, may be placed equiangularly around a circle for sensing a rotation angle of a target. Selection of a particular number of magnetic field sensing elements may depend on factors such as cost, size of a substrate on which the magnetic field sensing elements are placed, and application requirements.

The example of utilizing six magnetic field sensing elements placed equiangularly around a circle in a sensor device will be further discussed in embodiments herein. However, one of skill in the art will recognize that the concepts discussed below with respect to six magnetic field sensing elements may be extended to sensor devices utilizing more, or less, than six magnetic field sensing elements placed equiangularly around a circle.

As previously discussed, in some embodiments, magnetic field sensing elements may be differentially paired. For example, magnetic field sensing elements may be grouped in pairs, such that a difference between outputs of each of the pairs may be determined and output as a differential signal corresponding to the respective pair. Use of differentially-coupled magnetic field sensing elements in a sensor device may allow the sensor device to be immune to stray magnetic fields.

Looking again at example 360 of FIG. 3C, in some embodiments, magnetic field sensing element #1 365 and magnetic field sensing element #4 380 may be differentially coupled, magnetic field sensing element #2 370 and magnetic field sensing element #5 385 may be differentially coupled, and magnetic field sensing element #3 375 and magnetic field sensing element #6 390 may be differentially coupled, such that three differential channels are output as shown below:

$$\text{Equation 4: } CH_1 \propto H_1 - H_4$$

$$\text{Equation 5: } CH_2 \propto H_2 - H_5$$

$$\text{Equation 6: } CH_3 \propto H_3 - H_6$$

where $CH_1$, $CH_2$, and $CH_3$ correspond to magnitudes of sensed magnetic fields of the three differentially coupled pairs that are output in three respective channels, $H_1$, $H_2$, $H_3$, $H_4$, $H_5$, and $H_6$ correspond to the sensed magnetic field at magnetic field sensing element #1 365, magnetic field sensing element #2 370, magnetic field sensing element #3 375, magnetic field sensing element #4 380, magnetic field sensing element #5 385, and magnetic field sensing element #6 390, respectively, and $\propto$ means proportional.

For the example where six magnetic field sensing elements are placed equiangularly around a circle, Equation 1 can be reduced based on Equations 4, 5, and 6 above to:

$$\text{Equation 7: } sine\ value = \frac{\sqrt{3}}{2}(CH_2 + CH_3)$$

Similarly, for the example where six magnetic field sensing elements are placed equiangularly around a circle, Equation 2 can be reduced based on Equations 4, 5, and 6 above to:

$$\text{Equation 8: } cosine\ value = CH_1 + \frac{1}{2}(CH_2 - CH_3)$$

Equation 3 for determining an angle of rotation $\delta$ of the target can be reduced as:

$$\text{Equation 9: } \delta = \tan^{-1}\left(\frac{\frac{\sqrt{3}}{2}(CH_2 + CH_3)}{CH_1 + \frac{1}{2}(CH_2 - CH_3)}\right)$$

It should be appreciated that, although Equations 7-9 were derived from Equations 1-3 for an example arrangement in which six magnetic field sensing elements are arranged equiangularly around a circle, and where the six magnetic field sensing elements are differentially paired into three separate channels, similar equations could be similarly derived from Equations 1-3 for any number of magnetic field sensing elements arranged equiangularly around a circle and could be coupled together in any number of differential pairs. The disclosure herein should not be limited to the specific example of Equations 7-9, but rather should be interpreted as including other equations that may be similarly derived from Equations 1-3.

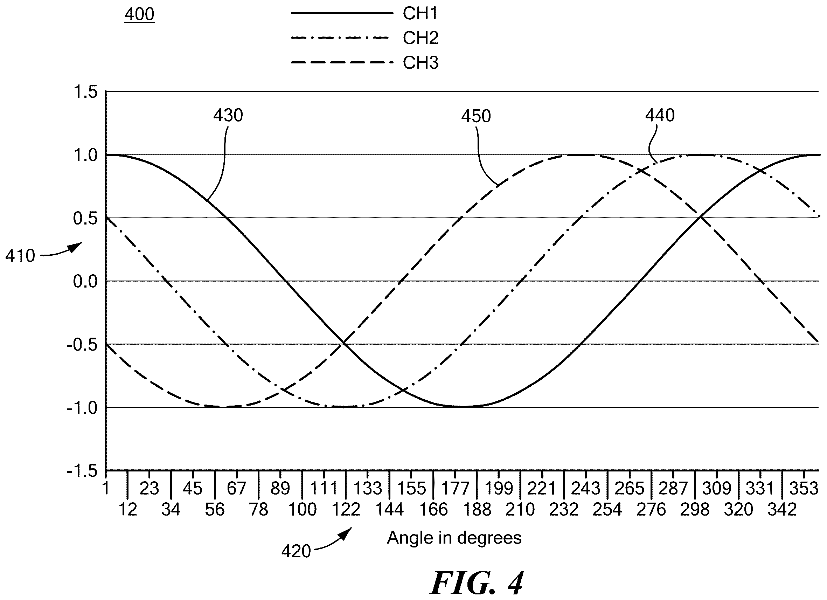

FIG. 4 shows a graph 400 of simulated signals representing a magnetic field as a target (e.g., target 115) rotates, with six simulated magnetic field sensing elements paired into three groups of differential pairs for outputting the three channel signals ($CH_1$, $CH_2$, $CH_3$) discussed above. Graph 400 includes a Y-axis 410 corresponding to values proportional to magnetic field strength, and an X-axis 420 corresponding to a rotation angle of the simulated target, in degrees. Plot 430 represents the channel 1 ($CH_1$) signal as the target rotates 360 degrees, plot 440 represents the channel 2 ($CH_2$) signal as

the target rotates 360 degrees, and plot 450 represents the channel 3 ($CH_3$) signal as the target rotates 360 degrees. As shown in graph 400, all three channel signals are sinusoidal curves. One of skill in the art would understand that sine and cosine curves are the same curves, but are phase-shifted by ninety degrees with respect to each other. Thus, the three channel curves may be referred to interchangeably as sine curves or as cosine curves. Graph 400 also shows that, due to the different placement of the magnetic field sensing elements with respect to each other, the channel 1 ($CH_1$), channel 2 ($CH_2$), and channel 3 ($CH_3$) signals are separated in phase. In particular, based on the locations of the magnetic field sensing elements discussed above, the channel 2 ($CH_2$) signal may be separated in phase from the channel 1 ($CH_1$) signal by 60°, and the channel 3 ($CH_3$) signal may be separated in phase from the channel 2 ($CH_2$) signal by 60° and from the channel 1 ($CH_1$) signal by 120°. Although shown as three, single-ended signals in graph 400, in some embodiments signals 430, 440, and 450 may instead be differential signals, such that the differential signal of channel 1 ($CH_1$) includes the outputs of both magnetic field sensing element #1 365 and magnetic field sensing element #4 380, the differential signal of channel 2 ($CH_2$) includes the outputs of both magnetic field sensing element #2 370 and magnetic field sensing element #5 385, and the differential signal of channel 3 ($CH_3$) includes the outputs of both magnetic field sensing element #3 375 and magnetic field sensing element #6 390, rather than the signals just including the differences between the outputs of these respective magnetic field sensing elements as shown in FIG. 4.

FIG. 5A shows a block diagram of a system 500 with example sensing circuitry, consistent with embodiments of the present disclosure. System 500 may include a target 501 that rotates and sensing circuitry 502. Target 501 may be the same as target 115, for example. Alternatively, target 501 may be any of the other types of targets previously discussed. Sensor device circuitry 502 may include magnetic field sensing elements for sensing a magnitude of the magnetic field generated by target 501, and for processing and/or conditioning the signals output from the magnetic field sensing elements to obtain sine and cosine curve values. The sine and cosine curve values may then be used to determine a rotation angle of a rotating object, such as the rotation angle of target 501 or of an object to which target 501 is attached. In some embodiments, sensing circuitry 502 may comprise a sensor device. In other embodiments, sensing circuitry 502 may correspond to only a portion of the circuitry in a sensor device. In some embodiments, a sensor device may itself use the obtained sine and cosine curve values to determine a rotation angle of the rotating object. In other embodiments, the sine and cosine curve values may be output from the sensor device to a different external system, which may determine the rotation angle of the rotating object.

Although 500 is referred to above as a system, and 502 is referred to above as sensing circuitry, it should be appreciated that 502 could be a complete sensor device, and is itself also a system, and so may be referred to as sensing circuitry, as a sensor device, or as a system herein.

Sensing circuitry 502 may include magnetic field sensing elements 509A, 509B, 509C, 509D, 509E, 509F. As discussed above, the magnetic field sensing elements may be arranged around a center. In the example shown in FIG. 5A, there are six magnetic field sensing elements, which may be laid out equiangularly in a circle in the sensor device as shown in FIG. 3C. Magnetic field sensing elements 509A and 509B may be differentially paired as pair 510A, magnetic field sensing elements 509C and 509D may be differentially paired as pair 510B, and magnetic field sensing elements 509E and 509F may be differentially paired as pair 510C. That is, magnetic field sensing elements 510A and 510B may correspond to magnetic field sensing elements #1 365 and #4 380 of FIG. 3C, magnetic field sensing elements 510C and 510D may correspond to magnetic field sensing elements #2 370 and #5 385 of FIG. 3C, and magnetic field sensing elements 510E and 510F may correspond to magnetic field sensing elements #3 375 and #6 390 of FIG. 3C.

As previously discussed, a magnetic field sensing element may be any type of element sensitive to a magnetic field, such as a Hall-effect element (e.g., planar Hall element, vertical Hall element, circular vertical Hall (CVH) element), a magnetoresistance element (e.g., InSb element, GMR element, AMR element, TMR element, MTJ element), a magnetotransistor element, or a receiving coil field sensing element. The magnetic field sensing elements may be of the same type of magnetic field sensing elements, or may be a combination of different types of magnetic field sensing elements.

The magnetic field sensing elements may be driven by driver circuits. For example, magnetic field sensing elements 509A and 509B may be driven by a driver circuit 514A, magnetic field sensing elements 509C and 509D may be driven by a driver circuit 514B, and magnetic field sensing elements 509E and 509F may be driven by a driver circuit 514C. A driver circuit may, for example, couple a magnetic field sensing element between a power supply voltage or current source and a ground potential. In some embodiments, a driver circuit may include additional elements, such as additional resistive elements, coupled with magnetic field sensing elements to create voltage divider circuitry that outputs a voltage representative of the magnetic field sensed by a magnetic field sensing element. Although three driver circuits are shown in FIG. 5A, a person of skill in the art would recognize that the same driver circuit may be used for all of the magnetic field sensing elements, or that different driver circuits may be used to drive different combinations of magnetic field sensing elements.

Signals (e.g., voltages) representative of the magnetic field strength sensed by the magnetic field sensing elements may be output to channel path circuitry. For example, signals output from magnetic field sensing elements 509A and 509B may be output to channel path 1 circuitry 516A, signals output from magnetic field sensing elements 509C and 509D may be output to channel path 2 circuitry 516B, and signals output from magnetic field sensing elements 509E and 509F may be output to channel path 3 circuitry 516C. The channel path circuitry may condition and/or process the signals output from the magnetic field sensing elements. For example, the signals produced by the magnetic field sensing elements in response to the magnetic field generated by target 501 may be relatively small in amplitude. Accordingly, amplifiers, filters, and/or other circuits or other known techniques may be used in the channel path circuitry to amplify and/or shape the signals. The channel path circuitry may include, for example, one or more amplifiers, analog-to-digital converters (ADCs), resistors, diodes, transistors, capacitors, inductors, filters (e.g., notch filters), and/or any other type of circuit component.

Once conditioned and/or processed in the channel path circuitry, the signals may be output as channel 1 ($CH_1$) signal 535, channel 2 ($CH_2$) signal 537, and channel 3 signal ($CH_3$) 539. For example, channel 1 ($CH_1$) signal 535 may correspond to $CH_1$ of Equation 4, channel 2 ($CH_2$) signal 537 may correspond to $CH_2$ of Equation 5, and channel 3 ($CH_3$) signal 539 may correspond to $CH_3$ of Equation 6.

In some embodiments, channel 2 ($CH_2$) signal 537 and channel 3 ($CH_3$) signal 539 may be input to output processing block A circuitry 518A. In some embodiments, output processing block A circuitry 518A may be configured to determine the sine curve values according to Equation 7. For example, output processing block A circuitry 518A may be configured to amplify the amplitudes (e.g., voltages) of each of channel 2 ($CH_2$) signal 537 and channel 3 ($CH_3$) signal 539 by a factor of $\sqrt{3}/2$, and to then sum the results. Alternatively, output processing block A circuitry 518A may be configured to sum the amplitudes (e.g., voltages) of channel 2 ($CH_2$) signal 537 and channel 3 ($CH_3$) signal 539, and then amplify the result by a factor of $\sqrt{3}/2$. The resulting sine curve value may be output as an output A signal 541.

In some embodiments, channel 1 ($CH_1$) signal 535, channel 2 ($CH_2$) signal 537, and channel 3 ($CH_3$) signal 539 may be input to output processing block B 518B. In some embodiments, output processing block B circuitry 518B may be configured to determine the cosine curve values according to Equation 8. For example, output processing block circuitry 518B may be configured to invert the channel 3 ($CH_3$) signal 539, such as with an inverting amplifier, then to sum the amplitudes (e.g., voltages) of the channel 2 ($CH_2$) signal 537 and the inverted channel 3 ($CH_3$) signal 539, then to amplify the result by a factor of ½, and then to sum that result with the amplitude of the channel 1 ($CH_1$) signal 535. Alternatively, each of the channel 2 ($CH_2$) 537 and channel 3 ($CH_3$) 539 signal amplitudes could be amplified by a factor of ½, the amplified channel 3 signal could be inverted, and the resulting inverted amplified channel 3 signal, the amplified channel 2 signal, and the channel 1 signal summed. The resulting cosine curve value may be output as an output B signal 543.

Of course, the examples above are just examples. A person of ordinary skill in the art will appreciate that the summing, subtracting, and amplifying functions can be performed in different orders to achieve the results of Equations 7 and 8, and may be performed with a variety of different types of circuit components. For example, the summing may be performed with a variety of different types of known voltage adder circuitry, such as operational amplifier (opamp) circuits, switched capacitor circuits, or current mirror circuits, as just some examples.

Moreover, as previously discussed, the disclosure herein should not be limited to the examples of Equations 7 and 8 above. As previously noted, Equations 7 and 8 were derived from Equations 1-3 for an example arrangement in which six magnetic field sensing elements are arranged equiangularly around a circle, and where the six magnetic field sensing elements are differentially paired into three separate channels. Similar equations could be similarly derived from Equations 1-3 for any number of magnetic field sensing elements arranged equiangularly around a circle and coupled together in any number of differential pairs. The disclosure herein should not be limited to the specific example of Equations 7-9, but rather should be interpreted as including other equations that may be similarly derived from Equations 1-3. A person of ordinary skill in the art would recognize that other equations derived in this manner may be implemented in output processing blocks similar to the manner described above, though the number of channels, number of channel inputs to each output processing block, and math performed within an output processing block may vary, depending on implementation.

The sine curve value in output A signal 541 and the cosine curve value in output B signal 543 may be substantially orthogonal to each other at any given time. That is, the sine and cosine curves may be 90° phase-shifted from each other. The sine and cosine values (e.g., voltages) on output A signal A 541 and output B signal 543, respectively, may then be used to determine an angle of rotation of the target. For example, an inverse tangent function (i.e., arctan function) (e.g., Equation 3, Equation 9) may be applied to the sine and cosine values at any given time to calculate an angle of rotation of the target. As one example, the two-argument arctangent function atan2, commonly used in computing and mathematics, may be used to calculate a rotation angle of the target based on the voltages of the sine and cosine curves at a given time. Various other techniques may be used to determine a measured rotation angle of the target instead of using an inverse tangent function, such as by using a lookup table, a polynomial fit, or a coordinate rotation digital computer (CORDIC) calculation.

It should be appreciated that channel 1 ($CH_1$) signal 535, channel 2 ($CH_2$) signal 537, channel 3 ($CH_3$) signal 539, output A signal 541, and output B signal 543 may update continuously and in real-time during operation of a sensor device. As a result, when a diametrically magnetized target with one north pole and one south pole is rotated 360 degrees, output A signal 541 may correspond to a period of a sine curve and output B signal 543 may correspond to a period of a cosine curve.

As previously discussed, sensing circuitry 502 may represent an entire sensor device, such that channel 1 ($CH_1$) signal 535, channel 2 ($CH_2$) signal 537, channel 3 ($CH_3$) signal 539, output A signal 541, and/or output B signal 543 are output to some external system (e.g., an electronic control unit (ECU) of an automobile) that then uses the signals to determine an angle of rotation of a rotation object and/or for error checking. Alternatively, sensing circuitry 502 may represent only a portion of the circuitry of a sensor device, such that the sensor device includes additional circuitry.

In some embodiments, sensing circuitry 502 may be thought of as having front-end circuitry 520 and back-end circuitry 522. Front-end circuitry 520 may include, for example, driver circuitries 514A, 514B, 514C, magnetic field sensing elements 509A, 509B, 509C, 509D, 509E, 509F, channel path 1 circuitry 516A, channel path 2 circuitry 516B, and channel path 3 circuitry 516C. Back-end circuitry 522 may include, for example, output processing block A circuitry 518A and output processing block B circuitry 518B.

FIG. 5B shows a block diagram of a system 550 with example sensing circuitry, consistent with embodiments of the present disclosure. In some embodiments, system 550 may be the same as system 500 of FIG. 5A, but with additional details consistent with some embodiments shown. For example, magnetic field sensing elements 509A, 509B, 509C, 509D, 509E, and 509F are shown in FIG. 5B as being Hall-effect plate sensing elements.

Each of channel path 1 circuitry 516A, channel path 2 circuitry 516B, and channel path 3 circuitry 516C is shown in FIG. 5B as including an amplifier and filter circuitry. For example, channel path 1 circuitry 516A is shown as including an amplifier 555A, channel path 2 circuitry 516B is shown as including an amplifier 555B, and channel path 3 circuitry 516C is shown as including an amplifier 555C. As previously mentioned, the signals produced by the magnetic field sensing elements in response to the magnetic field generated by target 501 may be relatively small in amplitude. Amplifier 555A may be used to amplify the signals produced by magnetic field sensing elements 509A and 509B, amplifier 555B may be used to amplify the signals produced by magnetic field sensing elements 509C and 509D, and amplifier 555C may be used to amplify the signals produced by magnetic field sensing elements 509E and 509F. In some embodiments, the amplifiers may be differential amplifiers, such that a single-ended output corresponding to a difference between the two inputs (i.e., the difference between the two differentially paired magnetic field sensing elements) is output. In other embodiments, the amplifiers may amplify both inputs and provide amplified versions of both inputs as outputs (e.g., as a differential signal).

FIG. 5B also shows signal path 1 circuitry 516A as including filtering circuitry 560A, channel path 2 circuitry 516B as including filtering circuitry 560B, and channel path 3 circuitry 516C as including filtering circuitry 560C. Each of the filtering circuitries may, for example, comprise a notch filter that blocks out signals of one or more frequencies in the signals from the amplifiers that may be attributable to noise. Of course, other types of filters may alternatively be used, such as low pass or high pass filters. For example, notch filters may be included in the signal path circuitries to remove chop offset from the amplified signals output out of amplifiers 555A, 555B, 555C. However, the disclosure is not limited to requiring these filtering circuitries. For example, a sensor device may use other techniques to compensate for these offsets, such as by trimming the offsets or otherwise shunting the gains in the amplifiers.

FIG. 5B shows output processing block A circuitry 518A and output processing block B circuitry 518B as comprising summing amplifiers 518A and 518B, respectively. As shown in FIG. 5B, summing amplifier 518A may receive channel 2 ($CH_2$) signal 537 and channel 3 ($CH_3$) signal 539 as inputs and may output an output A signal 541 that corresponds to a sine curve value. Summing amplifier 518B may receive channel 1 ($CH_1$) signal 535, channel 2 ($CH_2$) signal 537, and channel 3 ($CH_3$) signal 539 as inputs and may output an output B signal 543 that corresponds to a cosine curve value. As previously noted, in embodiments where target 501 is a diametrically magnetized magnet with one north pole and one south pole, when target 501 is rotated 360 degrees, a period of a sine curve may be output from output A signal 541, and a period of a cosine curve may be output from output B signal 543.

It should be appreciated that FIG. 5B is just an example. A person of ordinary skill in the art would recognize that additional and/or alternative circuitry may be used for the channel path circuitry (e.g., channel path 1 circuitry 516A, channel path 2 circuitry 516B, channel path 3 circuitry 516C). A person of ordinary skill in the art would further recognize that additional and/or alternative circuitry may be used in place of summing amplifiers 518A, 518B. For example, other known types of voltage adder circuitry may be used, such as switched capacitor circuits or current mirror circuits, as just some examples.

In some sensor devices, it may be important for the sensor device to determine when a fault occurs in one of the components or circuit connections in the sensor device. It may also be important to report such a fault to an external system, and to do so in a timely fashion. This may be particularly true in safety critical applications, such as in applications where an angle of rotation of a steering column may need to be determined to assist in power steering of an automobile. If a fault occurs in one of the components or circuit connections within the sensor device, any of the channel values, sine values, or cosine values output by the sensor device may be inaccurate, such that the information cannot be relied on by an external system. In some safety critical applications, standards (e.g., ASIL standards) may be adopted requiring that such faults be reported within a certain period of time.

Disclosed are example systems and methods for error checking in magnetic field sensing applications. In particular, described are example systems and methods for error checking in magnetic field sensors used for determining a rotation angle of an object that rotates. In some embodiments, a plurality of signals representative of a magnetic field generated by a magnetic target may be received. The plurality of signals may be combined to determine a value, and a determination made as to whether the determined value is an expected value. When the determined value is not an expected value, an output signal representing an error may be output. Systems and methods disclosed herein may provide for error checking in magnetic field sensor devices that may be implemented with analog circuitry and/or digital circuitry, and that may perform error checking periodically or continuously. Systems and method disclosed herein may also provide for error checking in magnetic field senor devices with circuitry that is power efficient, that outputs error signals quickly when errors occur, and/or that only requires a small area of a sensor device package such that the sensor device may be compact in size.

As discussed above with respect to FIGs. 5A and 5B, the signals produced by the magnetic field sensing elements may be amplified before being output as the channel signals (e.g., channel 1 ($CH_1$) signal 535, channel 2 ($CH_2$) signal 537, channel 3 ($CH_3$) signal 539). As discussed above with respect to FIG. 4, channel 2 ($CH_2$) signal 537 (e.g., signal 440) may be phase-shifted from channel 1 ($CH_1$) signal 535 (e.g., signal 430) by 60°, and channel 3 ($CH_3$) signal 539 (e.g., signal 450) may be phase-shifted from channel 2 ($CH_2$) signal 537 by 60° and from channel 1 ($CH_1$) signal 535 by 120°. As a result, the channel signals may be represented as:

$$\text{Equation 10: } CH_1 = Field * Gain * \cos(\delta)$$

$$\text{Equation 11: } CH_2 = Field * Gain * \cos(\delta + 60°)$$

$$\text{Equation 12: } CH_3 = Field * Gain * \cos(\delta + 120°)$$

where $CH_1$, $CH_2$, and $CH_3$ correspond to magnitudes of magnetic fields of the three differentially coupled pairs as sensed by the sensor device that are output in the three respective channels, *Field* corresponds to the magnitude of the magnetic field generated by the target and sensed by the magnetic field sensing elements of the channel, *Gain* corresponds to the gain of the components (e.g., amplifiers) in the respective channel path circuit for a channel, and $\delta$ corresponds to the angle of rotation of the target. In some embodiments, the same, or substantially the same, amount of gain may be applied in each of the channel paths (e.g., channel path 1 circuitry 516A, channel path 2 circuitry 516B, channel path 3 circuitry 516C). That is, for example, amplifiers 555A, 555B, and 555C may apply the same amount of gain to their incoming signals.

Assuming there are no faults in the components and/or circuit connection in front-end circuitry 520, the phase differences among the channels creates relations between the channels, such that the following equation holds true at any angle of rotation of the target:

$$\text{Equation 13: } CH_1 - CH_2 + CH_3 = X1$$

where *X1* is a constant value (e.g., constant voltage). In some embodiments where the gain applied in the path circuits is the same for all three channels, *X1* may be equal to or approximately zero, so long as there are no faults in the components and/or circuit connections in front-end circuitry 520. For example, at a rotation angle of the target of 0°, cos($\delta$) for channel 1 ($CH_1$) will equal 1, cos($\delta$+60°) for channel 2 ($CH_2$) will equal 1/2, and cos($\delta$+120°) will equal -1/2 such that 1 - 1/2 + -1/2 = 0. Though the values for each of the channels will change as the rotation angle of the target changes, the relationship between the channels will hold such that Equation 13 holds true (again assuming no fault conditions exist). Equation 13 may be referred to as a "nulling equation" herein.

Assuming there are no faults in the components and/or circuit connection in front-end circuitry 520, the phase differences among the channels also creates relations between the channels, such that the following equation holds true at any angle of rotation of the target:

$$\text{Equation 14: } CH_1{}^2 + CH_2{}^2 + CH_3{}^2 = X2$$

where *X2* is a constant value. The value of *X2* may vary depending on factors such as the strength of the magnetic field generated by the target, the distance of the magnetic field sensing elements from the target, and the gains of the channel path circuitries. However, once the sensor device is operating and *X2* is determined, *X2* should remain constant, or substantially constant, at any angle of rotation of the target (again assuming no fault conditions exist). Equation 14 may be referred to as a "module equation" herein.

Assuming there are no faults in the components and/or circuit connection in front-end circuitry 520 or in back-end circuitry 522, the phase differences among the channels also creates relations between the channels, such that the following equation holds true at any angle of rotation of the target:

$$\text{Equation 15: } B_{IN} = \frac{1}{3} \times \sqrt{\left(\frac{\sqrt{3}}{2}(CH_2 + CH_3)\right)^2 + \left(CH_1 + \frac{1}{2}(CH_2 - CH_3)\right)^2}$$

which can be otherwise written as:

$$\text{Equation 16: } B_{IN} = \frac{1}{3} \times \sqrt{sine\ value^2 + cosine\ value^2}$$

where $B_{IN}$ is a value proportional to the magnitude of the magnetic field sensed by the magnetic field sensing elements, *sine value* is the *sine value* of Equation 7 and *cosine value* is the *cosine value* of Equation 8. The value of $B_{IN}$ may vary depending on factors such as the strength of the magnetic field generated by the target, the distance of the magnetic field sensing elements from the target, and the gains of the channel path circuitries. However, once the sensor device is operating and $B_{IN}$ is determined, $B_{IN}$ should remain constant, or substantially constant, at any angle of rotation of the target (again assuming no fault conditions exist).

In some embodiments, any one or more of Equations 13-16 may be used to determine whether a fault occurs in front-end circuitry 520. That is, any one or more of Equations 13-16 may be used to determine whether a fault occurs in any of driver circuitries 514A, 514B, 514C, magnetic field sensing elements 509A, 509B, 509C, 509D, 509E, 509F, channel path circuitries 516A, 516B, 516C, amplifiers 555A, 555B, 555C, filtering circuits 560A, 560B, 560C, and/or any connections between them. For example, a fault may result from a broken connection, broken component, misorientation of a component, failure of a component to perform as expected (e.g., due to ambient temperature fluctuations), or for some other reason. Any such fault may affect the amplitude of the resulting channel signal, causing *X1* (e.g., zero Volts), *X2,* or $B_{IN}$ to no longer remain constant. Thus, by continually or periodically monitoring a combination of the channel 1 ($CH_1$), channel 2 ($CH_2$), and channel 3 ($CH_3$) signals according to one or more of Equations 13-16, and identifying any deviations from expected values of *X1*, *X2*, and/or $B_{IN}$, it may be determined whether an error condition has occurred in any of the three channel paths.

For example, if a value (e.g., voltage) *X1* resulting from combining the channel signals as shown in Equation 13 does not equal or approximately equal an expected value *X1* (e.g., a value of zero Volts), it may be known that a fault occurred in generating one of the channel signals. An output signal representing an error may then be output from the sensor device to inform an external system (e.g., an ECU) that the channel signals (e.g., channel signal 1 ($CH_1$), channel signal 2 ($CH_2$), channel signal 3 ($CH_3$)), output A 541 (e.g., sine) and output B 543 (e.g., cosine) signals, and/or any values corresponding to angle of rotation calculated based on the channel signals or output A, B signals, should not be trusted.

Similarly, if a value (e.g., voltage) *X2* resulting from combining the channel signals as shown in Equation 14 does not remain constant or at least substantially constant over time, it may be known that a fault occurred in generating one of the channel signals. An output signal representing an error may then be output from the sensor device to inform an external system (e.g., an ECU) that the channel signals (e.g., channel signal 1 ($CH_1$), channel signal 2 ($CH_2$), channel signal 3 ($CH_3$)), output A 541 (e.g., sine) and output B 543 (e.g., cosine) signals, and/or any values corresponding to an angle of rotation calculated based on the channel signals or output A, B signals, should not be trusted.

In some embodiments, Equations 15 and/or 16 may be used to determine whether a fault occurs in back-end circuitry 522, such as in output processing block A circuitry (e.g., summing amplifier) 518A or in output processing block B circuitry (e.g., summing amplifier) 518B. For example, a fault may result from a broken connection, broken component, failure of a component to perform as expected (e.g., due to ambient temperature fluctuations), or for some other reason. Any such fault may affect the amplitude of output A (e.g., sine) signal 541 and of output B (e.g., cosine) signal 543. Thus, by continually or periodically monitoring a combination of output A (e.g., sine) signal 541 and output B (e.g., cosine) signal 543 according to Equation 15 and/or 16, it may be determined whether an error condition has occurred in output processing block A circuitry (e.g., summing amplifier) 518A or in output processing block B circuitry (e.g., summing amplifier) 518B.

FIG. 6A shows a block diagram of a system 600, with an example of sensing circuitry 502 and monitoring circuitry 604, consistent with embodiments of the present disclosure. In some embodiments, target 501 may be the same as target 501 in FIGs. 5A or 5B, and sensing circuitry 502 may be the same as sensing circuitry 502 in FIGs. 5A or 5B.

System 600 may also include monitoring circuitry 604. In some embodiments, sensing circuitry 502 and monitoring circuitry 604 may both be included in a sensor device, which may be packaged in a package (e.g., package 133 of FIG. 1), such as in an integrated circuit (IC) package. In other embodiments, monitoring circuitry 604 may be provided separately from a sensor device, such as in another IC that receives channel 1 ($CH_1$) signal 535, channel 2 ($CH_2$) signal 537, channel 3 ($CH_3$) signal 539, output A (e.g., sine) signal 541, and/or output B (e.g., cosine) signal 543 from sensing device circuitry 502.

Monitoring circuitry 604 may include monitor 1 circuitry 620A. Monitor 1 circuitry 620A may receive the channel signals (e.g., channel 1 ($CH_1$) signal 535, channel 2 ($CH_2$) signal 537, channel 3 ($CH_3$) signal 539), and may comprise circuitry configured to combine the channel signals according to Equation 13 (nulling equation) to obtain the value (e.g., voltage) *X1.* In some embodiments, the value *X1* may be output as monitor 1 signal 606.

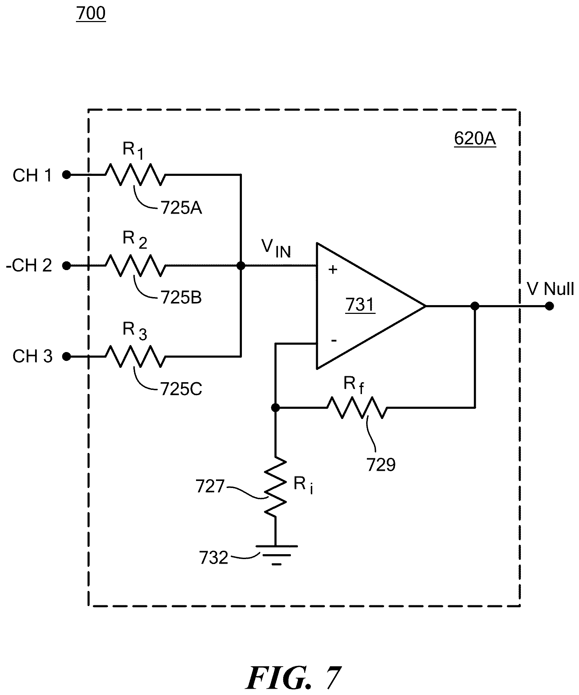

FIG. 7 shows an example diagram 700 of a circuit for implementing monitor 1 circuitry 620A of FIG. 6. As shown in FIG. 7, monitor 1 circuitry 620A may include an operational amplifier (OpAmp) 731. A non-inverting input of OpAmp 731 may be connected to channel 1 ($CH_1$) signal 535 over a resistor ($R_1$) 725A, to an inverted version of channel 2 ($CH_2$) signal 537 over a resistor ($R_2$) 725B, and to channel 3 ($CH_3$) signal 539 over a resistor ($R_3$) 725C. The inverted version of channel 2 ($CH_2$) signal 537 may be obtained by passing channel 2 ($CH_2$) signal 537 through an inverting amplifier before it is input to the non-inverting input of OpAmp 731 through resistor ($R_2$) 725B. The inverting input of OpAmp 731 may be connected to a ground potential 732 over a resistor ($R_i$) 727, and to the output terminal of OpAmp 731 through a feedback resistor ($R_f$) 729. Circuit 700 may operate to combine the three channel signals according to Equation 13 (nulling equation) to obtain the value *X1* (e.g., approximately zero Volts when there is not a fault in one of the channel paths).

FIG. 7 is just one example circuit for implementing monitor 1 circuitry 620A of FIG. 6. A person of skill in the art would recognize that other types of voltage adder circuitry may be used to implement Equation 13 (nulling equation), such as by using other types of OpAmp circuits, switched capacitor circuits, or current mirror circuits. The scope of the disclosure herein should be interpreted as encompassing these other known types of voltage adder circuits.

Monitoring circuitry 604 may also include monitor 3 circuitry 620C. Monitor 3 circuitry 620C may receive the channel signals (e.g., channel 1 ($CH_1$) signal 535, channel 2 ($CH_2$) signal 537, channel 3 ($CH_3$) signal 539), and may comprise circuitry configured to combine the channel signals according to Equation 14 (module equation) to obtain the value (e.g., voltage) *X2.* In some embodiments, the value *X2* may be output as monitor 3 signal 610.

There are known types of circuits that may be used to obtain the square of a signal, such as voltage multiplier circuits or Gilbert cell circuits. The square of a signal may also be obtained by converting the signal from analog to digital with an analog-to-digital converter (ADC) and then computing the square digitally, such as with a digital signal processor (DSP). Once the squared signals are obtained, they may be summed together using voltage adder circuits, such as OpAmp circuits, switched capacitor circuits, or current mirror circuits, as discussed above. The scope of the disclosure herein should be interpreted as encompassing known circuit types for squaring and adding voltages of signals.

Monitoring circuitry 604 may also include monitor 2 circuitry 620B. Monitor 2 circuitry 620B may receive output A (e.g., sine) 541 signal and output B (e.g., cosine) 543 signal, and may include circuitry configured to combine the channel signals according to Equation 15 and/or Equation 16 to obtain the value $B_{IN}$. In some embodiments, the value $B_{IN}$ may be output as monitor 2 signal 608. As discussed above, there are known types of circuits that may be used to obtain the square of a signal, such as voltage multiplier circuits or Gilbert cell circuits, or by converting signals from analog to digital with an ADC and then computing the squares digitally, such as with a DSP. As also discussed above, there are known types of circuits for adding voltages of signals, such as with OpAmp circuits, switched capacitor circuits, or current mirror circuits. There are also known circuits for determining a square root of a voltage of a signal, such as using OpAmp circuits. It is also known that the gain of a voltage of a signal may be adjusted by 1/3 using an OpAmp circuit. Thus, a person of ordinary skill in the art would recognize that combinations of these different types of circuits may be used to determine a value $B_{IN}$ according to Equation 15 and/or Equation 16, and these combinations of circuits should be considered to be within the scope of the disclosure herein.

FIGs. 5A, 5B, 6A, 6B, and 7 show the channel signals (e.g., channel 1 ($CH_1$) signal 535, channel 2 ($CH_2$) signal 537, channel 3 ($CH_3$) signal 539), output A (e.g., sine) signal 541, output B (e.g., cosine) signal 543, and the monitor signals (e.g., monitor 1 signal 606, monitor 2 signal 608, monitor 3 signal 610) as being single-ended signals (e.g., single signals carrying voltages referenced to a ground potential), however, the disclosure is not so limited. A person of ordinary skill in the art would recognize that differential signals may be passed through sensor device circuitry 502 and/or monitoring circuitry 604. That is, instead of a single channel 1 signal 535, channel 1 signal 535 may comprise two signals, a positive channel 1 signal and a negative channel 1 signal. Likewise with channel 2 signal 537 and channel 3 signal 539. Similarly, output A (e.g., sine) signal 541 may comprise two signals, a positive output A (e.g. positive sine) signal and a negative output A (e.g., negative sine) signal. Output B (e.g., cosine) signal 543 may comprise two signals, a positive output B (e.g., positive cosine) signal and a negative output B (e.g., negative cosine) signal. Monitor 1 signal 606 may also comprise two signals, a positive monitor 1 signal and a negative monitor 1 signal. Likewise with monitor 2 signal 608 and monitor 3 signal 610. In some embodiments, passing differential signals through sensor device circuitry 502 and/or monitoring circuitry 604 may provide for more robust signaling within the sensor device. In some embodiments, passing differential signals through sensor device circuitry 502 and/or monitoring circuitry 604 may also simplify some of the circuitry. For example, rather than utilizing an inverting amplifier to generate the single-ended negative channel 2 ($CH_2$) signal to be input to the nulling equation circuitry of FIG. 7, the polarity of the differential inputs of the channel 2 ($CH_2$) signal may simply be flipped when input to the circuit to create the negative channel 2 ($CH_2$) signal.

The discussion above demonstrates that, in some embodiments, Equations 13-16 may be monitored in analog circuitry. Monitoring these equations to identify faults with analog circuitry may have advantages in terms of speed of identifying and reporting errors, cost, and size of the required circuitry. However, one or more of Equations 13-16 may also be monitored digitally.

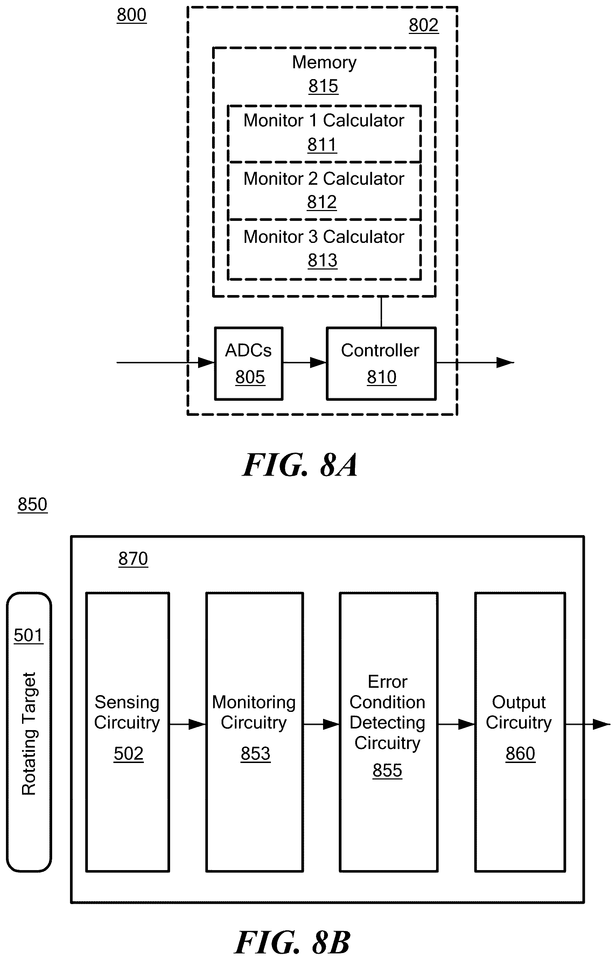

FIG. 8A shows a block diagram 800 of example digital monitoring circuitry 802, consistent with embodiments of the present disclosure. For example, in some embodiments, digital monitoring circuitry 802 may be used as monitoring circuitry 604. In some embodiments, one or more signals (e.g., channel 1 (CH$_1$) signal 535, channel 2 (CH$_2$) signal 537, channel 3 (CH$_3$) signal 539, output A (e.g., sine) signal 541, output B (e.g., cosine) signal 543) may be converted from analog to digital with one or more analog-to-digital converters (ADCs) 805. The digital versions of the signals may be output from ADC(s) 805 to controller(s) 810.

A controller (e.g., controller 810) may include any suitable type of processing circuitry, such as a digital application-specific integrated circuit (ASIC), a field programmable gate array (FPGA), a CORDIC processor, a special-purpose processor, synchronous digital logic circuitry, asynchronous digital logic circuitry, a general-purpose processor (e.g., microprocessor without interlocked pipelined stages (MIPS) processor, x86 processor), etc. The controller may also include a clock. The clock may timestamp when signals received from sensing circuitry 502 or determined by the controller are recorded (e.g., timestamp with an elapsed amount of time measured by the clock), such that, for example, determined channel signal values, sine and cosine values, monitoring signal values, and/or determined rotation angle values and the times at which the signal values were received or determined may be stored (e.g., in a memory 815). One of skill in the art would recognize that the clock need not be internal to the controller, and may instead by an external component connected to the controller.

In some embodiments, digital monitoring circuitry 802 may include one or more memories 815. A memory 815 may include any suitable type of volatile and/or non-volatile memory. In some embodiments, a memory may be a non-transitory computer-readable medium. By way of example, a memory 815 may include a random-access memory (RAM), a dynamic random-access memory (DRAM), an electrically-erasable programmable read-only memory (EEPROM), and/or any other suitable type of memory. The memory may store instructions that, when executed by controller(s) 810, cause controller(s) 810 to carry out certain determinations, steps, processes, and/or calculations. For example, a memory may store instructions that, when executed by the controller(s), cause the controller(s) to (1) perform calculations to determine the monitor 1 signal values (e.g., using Equation 13) (e.g., using monitor 1 calculator instructions 811), (2) perform calculations to determine the monitor 2 signal values (e.g., using Equations 15 or 16) (e.g., using monitor 23 calculator instructions 812), and/or (3) perform calculations to determine the monitor 3 signal values (e.g., using Equation 14) (e.g., using monitor 3 calculator instructions 813).

In some embodiments, a memory 815 may not be included in digital monitoring circuitry 802, and the monitoring calculations may instead by performed using digital logic circuitry within controller 810. In some embodiments, digital values corresponding to the outputs of the monitoring calculations (e.g., the outputs of Equations 13, 14, 15, and/or 16) may be output from controller(s) 810 as they are determined.

FIG. 8B shows a block diagram of an example system 850 with a sensor device 870, consistent with embodiments of the present disclosure. System 850 may include a target 501, which may be the same target 501 as discussed previously with respect to FIGs. 5A, 5B, and 6. Sensor device 870 may also include sensing circuitry 502, which may be any of the examples of sensing circuitry 502 discussed above with respect to FIGs. 5A, 5B, and 6. Sensor device 870 may further include monitoring circuitry 853, which may be the same as monitoring circuitry 602 discussed above with respect to FIG. 6, or as the monitoring circuitry 802 discussed above with respect to FIG. 8A.

Sensor device 870 may also include error condition detecting circuitry 855. Error condition detecting circuitry 855 may receive, for example, the three monitoring signals (e.g., monitor 1 signal 606, monitor 2 signal 608, monitor 3 signal 610) generated by monitoring circuitry 604 or digital monitoring circuitry 802. Error condition detection circuitry may store one or more preset threshold values for acceptable deviations from expected values of the monitoring signals, and preset periods of time that are acceptable for deviations from expected values of the monitoring signals. Then, when error condition detecting circuitry 855 detects that a value of any one of the monitoring signals exceeds a threshold value for more than a period of time that was preset for the respective monitoring signal, a signal representing an error may be output (e.g., via output circuitry 860). A person of ordinary skill in the art would appreciate that there are several known techniques for determining whether a voltage on a signal exceeds a predetermined voltage value for more than a period of time (e.g., using comparators and counters), and any of these known techniques may be used to implement error condition detecting circuitry 855. In some embodiments where monitoring circuitry 853 is implemented using digital monitoring circuitry 802, error condition detecting circuitry 855 may be implemented within controller(s) 810.

Sensor device 870 may also include output circuitry 860. Output circuitry 860 may include any suitable type of interface for outputting one or more signals. Output circuitry 860 may include one or more of a wired or wireless interface. By way of example, output circuitry 860 may include an interface to one or more conductors for outputting any one or more of signals 535, 537, 539, 541, 543, 606, 608, 610, or error condition signals, a current modulator for sending information along a conductor via current pulses, a voltage modulator for sending information along a conductor via voltage pulses, an Inter-Integrated Circuit (I$^2$C) interface, a Controller Area Network (CAN) bus interface, a WiFi interface, an Ethernet interface, a Universal Serial Bus (USB) interface, a local area network (LAN) interface, a cellular (e.g., 5G) interface, and/or any other suitable type of interface. In some embodiments, output circuitry 860 may output certain signals continuously from sensor device circuitry 502, but may force those signals to a certain value when an error condition has been detected.

For example, output circuitry 860 may output output A (e.g., sine) signal 541 and output B (e.g., cosine) signal 543 continuously such that an external system may determine an angle or rotation of a target based on these signals, and output circuitry 860 may force one or both of those signals high (e.g., to a power supply high (VCC) voltage) or low (e.g., to a ground potential) continuously when an error condition has been detected. Output circuitry 860 may output one or more signals as analog and/or digital signals.

Although not shown in FIG. 8B, sensor device 870 may also include one or more voltage regulators. Voltage regulator(s) may, for example, convert or regulate voltage to provide a stable power supply to sensor device circuitry 502, monitoring circuitry 853, error condition detecting circuitry 855, and/or output circuitry 860.

Although sensor devices were described with respect to FIGs. 6, 8A, and 8B as including three different monitors that perform error checking with different equations (i.e., Equations 13, 14, 15 and/or 16), the disclosure is not so limited. A sensor device (e.g., sensor device 870) may monitor only one of these equations, only two of these equations, or all three of these equations. Moreover, it should be understood that additional circuitry or logic may be included in a sensor device for performing additional error checking not described herein.

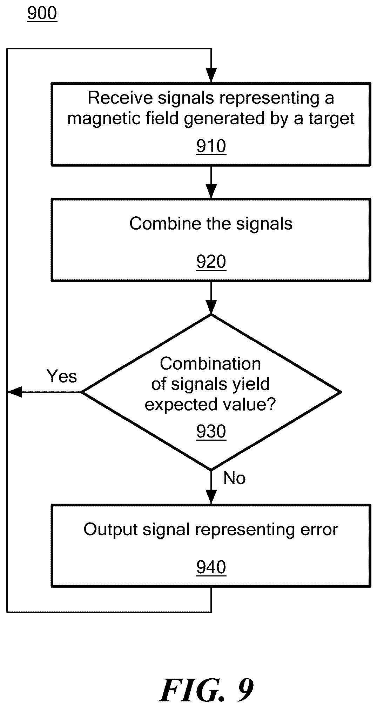

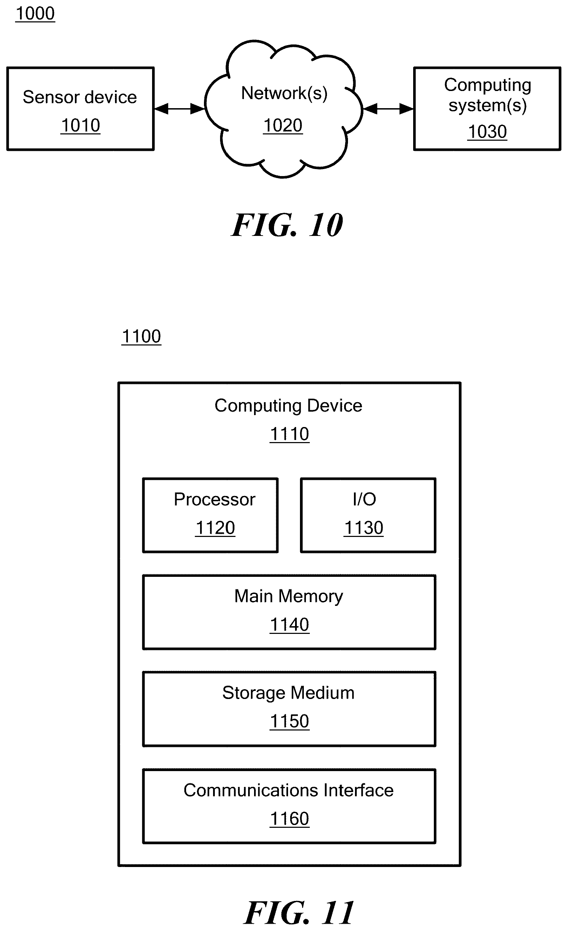

FIG. 9 shows an example process 900 for identifying an error in measuring a characteristic of a target, consistent with embodiments of the present disclosure. In some embodiments, process 900 may be performed in a sensor device (e.g., sensor device 870). In some embodiments, process 900 may be performed in an external system (e.g., computing system(s) 1030 of FIG. 10, computing device(s) of FIG. 11) executing instructions stored in a memory.

In 910, signals representing a magnetic field generated by a target may be received. For example, the signals may include channel 1 ($CH_1$) signal 535, channel 2 ($CH_2$) signal 537, channel 3 ($CH_3$) signal 539, output A (e.g., sine) signal 541, and/or output B (e.g., cosine) signal 543. In some embodiments, the signals may be received by monitoring circuitry 853 (e.g., monitoring circuitry 604, digital monitoring circuitry 802).

In 920, the signals may be combined. For example, monitoring circuitry 853 (e.g., monitoring circuitry 604, digital monitoring circuitry 802) may combine the signals in circuitry or in digital logic according to Equations 13, 14, 15, and/or 16 to determine monitored values (e.g., $X1$, $X2$, $B_{IN}$).

In 930, a determination may be made as to whether the determined values are expected values. For example, in some embodiments error condition detecting circuitry 855 (or controller(s) 810) may determine whether the determined value exceeds a predetermined threshold from an expected value (e.g., 10% more than the expected value) and has exceeded the predetermined threshold for a predetermined period of time (e.g., for 500 microseconds). In some embodiments, the predetermined threshold from the expected value and the predetermined period of time may be set depending on a target rotation value and/or application constraints. If the determined value has not exceeded the predetermined threshold for the predetermined period of time, error condition detecting circuitry 855 (or controller(s) 810) may determine that the combination of signals yield the expected value (YES), and the process may repeat. If the determined value has exceeded the predetermined threshold for the predetermined period of time, error condition detecting circuitry 855 (or controller(s) 810) may determine that the combination of signals does not yield the expected value (NO), and the process may proceed to 940.

In 940, a signal representing an error condition may be output. For example, error detection circuitry 855 (or controller(s) 810) may, upon determining that the combination of signals do not yield the expected value, instruct output circuitry 860 to output an output signal representing an error condition, and in 940 the output circuitry may output the output signal representing the error condition. In some embodiments, the output signal representing the error condition may be output on a dedicated output signal line, or on a data signal line. In other embodiments, the output signal representing the error condition may be output by forcing a signal line used for another purpose, such as to output channel A (e.g., sine) signal 541 and/or output channel B (e.g., cosine) signal 543 to a high or low value continuously.

One example of process 900 was described above with respect to monitoring circuitry 853 as a whole. Process 900 may also be performed with respect to each one of the monitored equations, as will be discussed below.

For example, in 910, signals representing a magnetic field generated by a target may be received by monitor 1 circuitry 620A (or corresponding digital components/logic of controller(s) 810). The received signals may include channel 1 ($CH_1$) signal 535, channel 2 ($CH_2$) signal 537, and channel 3 ($CH_3$) signal 539 (or digital versions of these signals in the case of controller(s) 810).

In 920, the received signals may be combined according to Equation 13 (nulling equation) to obtain a value $X1$. For example, the received signals may be combined using the example circuit of FIG. 7 to obtain the value $X1$. Alternatively, the received signals may be combined using another type of OpAmp circuit, a switched capacitor circuit, a current mirror circuit, or in digital logic within controller(s) 810.

In 930, error detecting circuitry 855 (or controller(s) 810) may determine whether $X1$ is the expected value $X1$. For example, error detecting circuitry 855 (or controller(s) 810) may determine whether $X1$ exceeds a predetermined threshold of deviation from an expected value $X1$ and has exceeded the predetermined threshold for a predetermined period of time. If the determined value $X1$ has not exceeded the predetermined threshold for the predetermined period of time, error condition detecting circuitry 855 (or controller(s) 810) may determine that the combination of signals yield the expected value (YES), and the process may repeat. If the determined value $X1$ has exceeded the predetermined threshold for the predetermined period of time, error condition detecting circuitry 855 (or controller(s) 810) may determine that the combination of signals does not yield the expected value (NO), and the process may proceed to 940.

In 940, a signal representing an error condition may be output. For example, error detection circuitry 855 (or controller(s) 810) may, upon determining that the combination of signals do not yield the expected value, instruct output circuitry 860 to output an output signal representing an error condition, and in 940 the output circuitry may output the output signal representing the error condition. In some embodiments, the output signal representing the error condition may be output on a dedicated output signal line, or on a data signal line. In other embodiments, the output signal representing the error condition may be output by forcing a signal line used for another purpose, such as to output channel A (e.g., sine) signal 541 and/or output channel B (e.g., cosine) signal 543 to a high or low value continuously.

Similarly, in 910, signals representing a magnetic field generated by a target may be received by monitor 2 circuitry 620B (or corresponding digital components/logic of controller(s) 610). The received signals may include output A (e.g., sine) signal 541 and output B (e.g., cosine) signal 543 (or digital versions of these signals in the case of controller(s) 810).

In 920, the received signals may be combined according to Equation 15 and/or Equation 16 to obtain a value $B_{IN}$. For example, the received signals may be combined using one or more of a voltage multiplier circuit, a Gilbert cell circuit, digital logic in controller(s) 810 (combining digital versions of the signals), a voltage adder circuit, an OpAmp circuit, a switched capacitor circuits, and/or a current mirror circuit.

In 930, error detecting circuitry 855 (or controller(s) 810) may determine whether $B_{IN}$ is the expected value $B_{IN}$. For example, error detecting circuitry 855 (or controller(s) 810) may determine whether $B_{IN}$ exceeds a predetermined threshold of deviation from an expected value $B_{IN}$ and has exceeded the predetermined threshold for a predetermined period of time. If the determined value $B_{IN}$ has not exceeded the predetermined threshold for the predetermined period of time, error condition detecting circuitry 855 (or controller(s) 810) may determine that the combination of signals yield the expected value (YES), and the process may repeat. If the determined value $B_{IN}$ has exceeded the predetermined threshold for the predetermined period of time, error condition detecting circuitry 855 (or controller(s) 810) may determine that the combination of signals does not yield the expected value (NO), and the process may proceed to 940.

In 940, a signal representing an error condition may be output. For example, error detection circuitry 855 (or controller(s) 810) may, upon determining that the combination of signals does not yield the expected value, instruct output circuitry 860 to output an output signal representing an error condition, and in 940 the output circuitry may output the output signal representing the error condition. In some embodiments, the output signal representing the error condition may be output on a dedicated output signal line, or on a data signal line. In other embodiments, the output signal representing the error condition may be output by forcing a signal line used for another purpose, such as to output channel A (e.g., sine) signal 541 and/or output channel B (e.g., cosine) signal 543 to a high or low value continuously.

Similarly, in 910, signals representing a magnetic field generated by a target may be received by monitor 3 circuitry 620C (or corresponding digital components/logic of controller(s) 810). The received signals may include channel 1 ($CH_1$) signal 535, channel 2 ($CH_2$) signal 537, and channel 3 ($CH_3$) signal 539 (or digital versions of these signals in the case of controller(s) 810).

In 920, the received signals may be combined according to Equation 14 (module equation) to obtain a value $X2$. For example, the received signals may be combined using one or more of a voltage multiplier circuit, a Gilbert cell circuit, controller(s) 810 (using digital versions of the signals), an OpAmp circuit, a switched capacitor circuit, and/or a current mirror circuit to obtain the value $X2$.

In 930, error detecting circuitry 855 (or controller(s) 810) may determine whether $X2$ is the expected value $X2$. For example, error detecting circuitry 855 (or controller(s) 810) may determine whether $X2$ exceeds a predetermined threshold of deviation from an expected value $X2$ and has exceeded the predetermined threshold for a predetermined period of time. If the determined value $X2$ has not exceeded the predetermined threshold for the predetermined period of time, error condition detecting circuitry 855 (or controller(s) 810) may determine that the combination of signals yield the expected value (YES), and the process may repeat. If the determined value $X2$ has exceeded the predetermined threshold for the predetermined period of time, error condition detecting circuitry 855 (or controller(s) 810) may determine that the combination of signals does not yield the expected value (NO), and the process may proceed to 940.

In 940, a signal representing an error condition may be output. For example, error detecting circuitry 855 (or controller(s) 810) may, upon determining that the combination of signals do not yield the expected value, instruct output circuitry 860 to output an output signal representing an error condition, and in 940 the output circuitry may output the output signal representing the error condition. In some embodiments, the output signal representing the error condition may be output on a dedicated signal line, or on a data signal line. In other embodiments, the output signal representing the error condition may be output by forcing a signal line used for another purpose, such as to output channel A (e.g., sine) signal 541 and/or output channel B (e.g., cosine) signal 543 to a high or low value continuously.

FIG. 10 is a block diagram of an example computing environment for implementing embodiments of the present disclosure, in accordance with some embodiments. For example, a sensor device 1010 (e.g., sensor device 870) may output signals, such as channel 1 ($CH_1$) signal 535, channel 2 ($CH_2$) signal 537, channel 3 ($CH_3$) signal 539, output A (e.g.,

sine) signal 541, output B (e.g., cosine) signal 543, and/or an error condition signal over one or more networks 1020 to one or more computing systems 1230. As previously discussed, computing system(s) 1030 may then use output A (e.g., sine) signal 541 and output B (e.g., cosine) signal 543 to determine a rotation angle of a target (e.g., target 501). Alternatively, computing system(s) 1030 may use channel 1 ($CH_1$) signal 535, channel 2 ($CH_2$) signal 537, and channel 3 ($CH_3$) signal 539 to determine a rotation angle of the target. For example, as previously discussed, computing system(s) 1030 may use the sine and cosine signals, or the channel signals, to calculate an angle of rotation of the target, such as by using the two-argument arctangent function atan2, commonly used in computing and mathematics. Various other techniques may be used by computing system(s) 1030 to determine a measured rotation angle of the target instead of using an inverse tangent function, such as by using a lookup table, a polynomial fit, or a CORDIC calculation. Performing these calculations in an external system, such as in computing system(s) 1030, may be advantageous in that sensor device 1010 may not require components that take up more space, that are less power efficient, that are slower, or that may be more costly. As a result, sensor device 1010 may be more compact, more power efficient, faster, and/or less expensive.

Computing system(s) 1030 may also use the error condition signal to determine whether an error condition has occurred. For example, the error condition signal may indicate to computing system(s) 1030 that signals output from sensor device 1010 (e.g., channel 1 ($CH_1$) signal 535, channel 2 ($CH_2$) signal 537, channel 3 ($CH_3$) signal 539, output A (e.g., sine) signal 541, output B (e.g., cosine) signal 543) cannot be trusted due to an error condition.

Network(s) 1020 may include, for example, one or more wired and/or wireless networks. By way of example, the network(s) 1020 may include one or more conductor over which current signals may be transmitted, one or more conductors over which voltage signals may be transmitted, an Inter-Integrated Circuit ($I_2C$) network, a Controller Area Network (CAN) network, a WiFi network, an Ethernet network, a Universal Serial Bus (USB) network, a local area network (LAN) network, a cellular (e.g., 5G) network, and/or any other suitable type of network.

Computing system(s) 1030 may include one or more computing devices (see, e.g., computing device 1110 of FIG. 11). A computing device may be, for example, a computing device that may be used to perform some or all of process 900 of FIG. 9. A computing device 1110 may be, for example, an integrated circuit connected to a sensor device. Alternatively, a computing device 1110 may be a computer, such as a laptop computer, mobile phone, tablet, personal computer, server computer, or other type of computer.

FIG. 11 is a block diagram 1100 of a computing device 1110, consistent with embodiments of the present disclosure. As shown in FIG. 11, a computing device 1110 may include one or more processors or controllers 1120 for executing instructions. Processors or controllers suitable for the execution of instructions may include, by way of example, both general and special purpose (e.g., application specific integrated circuit (ASIC) processors or controllers. A computing device 1110 may also include one or more input/output (I/O) devices 1130. By way of example, I/O devices 1130 may include keys, buttons, mice, joysticks, styluses, etc. Keys and/or buttons may be physical and/or virtual (e.g., provided on a touch screen interface). A computing device 1110 may be connected to one or more displays (not shown) via I/O 1130. A display may be implemented using one or more display panels, which may include, for example, one or more cathode ray tube (CRT) displays, liquid crystal displays (LCDs), plasma displays, light emitting diode (LED) displays, touch screen type displays, organic light emitting diode (OLED) displays, or any other type of suitable display.

A computing device 1110 may include one or more storage devices configured to store data and/or software instructions used by processor(s) or controller(s) 1120 to perform operations consistent with disclosed embodiments. For example, computing device 1110 may include main memory 1140 configured to store one or more software programs that, when executed by processor(s) or controller(s) 1120, cause processor(s) or controller(s) 1120 to perform functions or operations consistent with disclosed embodiments.

By way of example, main memory 1140 may include NOR and/or NAND flash memory devices, read only memory (ROM) devices, random access memory (RAM) devices, etc. A computing device 1110 may also include one or more storage mediums 1150. By way of example, storage medium(s) 1150 may include hard drives, solid state drives, etc. A computing device 1110 may include any number of main memories 1140 and storage mediums 1150. A main memory 1140 or storage medium 1150 may, in some embodiments, be a non-transitory computer-readable medium.

A computing device 1110 may further include one or more communication interfaces 1160. Communication interface(s) 1160 may allow one or more signals to be received from a sensor device (e.g., sensor device 1010, sensor device 870) over one or more networks 1020, and may allow one or more signals to be transmitted to the sensor device. Example communication interface(s) 1160 include a modem, network interface card (e.g., Ethernet card), communications port, antenna, conductor over which current signals may be transmitted, an Inter-Integrated Circuit ($I_2C$) interface, a Controller Area Network (CAN) network interface, a WiFi interface, an Ethernet a Universal Serial Bus (USB) interface, a local area network (LAN) network interface, a cellular (e.g., 5G) interface, and/or any other suitable type of interface for transmitting and/or receiving signals or other information. Communication interface(s) 1160 may transmit software, data, or information in the form of signals, which may be electronic, electromagnetic, optical, and/or other types of signals. The signals may be provided to/from communications interface 1160 via a communications path (e.g., network(s) 1020), which may be implemented using wired, wireless, cable, fiber optic, radio frequency (RF), and/or other communications channels.

As discussed above, the example channel path circuitries (e.g., channel path 1 circuitry 516A, channel path 2 circuitry 516B, channel path 3 circuitry 516C), output processing blocks (e.g., output processing block A circuitry 518A, output processing block B circuitry 518B), and monitoring circuitries (e.g., monitor 1 circuitry 620A, monitor 2 circuitry 620B, monitor 3 circuitry 620C, digital monitoring circuitry 802), and monitoring equations (e.g., Equations 13-16) provided herein were provided as examples corresponding to a sensor device where six magnetic field sensing elements are placed equiangularly in a circle for sensing a magnetic field of a target. As also previously discussed, one of ordinary skill in the art would recognize that the concepts and examples herein may be extended to other example equations by reworking the math of the equations depending on the particular number and arrangement of magnetic field sensing elements, and that the circuitries may likewise be reconfigured such that an appropriate number of channel signals, the sine and cosine value signals, and the desired monitoring signals may be generated. The disclosure herein should not be limited to the specific examples discussed above with respect to use of six magnetic field sensing elements, and should be considered to encompass reconfigured examples based on different numbers of magnetic field sensing elements arranged equiangularly in a circle.

As used herein, the terms "processor" and "controller" are used to describe electronic circuitry that performs a function, an operation, or a sequence of operations. The function, operation, or sequence of operations can be hard coded into the electronic circuit or soft coded by way of instructions held in a memory device. The function, operation, or sequence of operations can be performed using digital values or using analog signals. In some embodiments, the processor or controller can be embodied in an application specific integrated circuit (ASIC), which can be an analog ASIC or a digital ASIC, in a microprocessor with associated program memory and/or in a discrete electronic circuit, which can be analog or digital. A processor or controller can contain internal processors or modules that perform portions of the function, operation, or sequence of operations. Similarly, a module can contain internal processors or internal modules that perform portions of the function, operation, or sequence of operations of the module.

While electronic circuits shown in figures herein may be shown in the form of analog blocks or digital blocks, it will be understood that the analog blocks can be replaced by digital blocks that perform the same or similar functions and the digital blocks can be replaced by analog blocks that perform the same or similar functions. Analog-to-digital or digital-to-analog conversions may not be explicitly shown in the figures but should be understood.

Various embodiments of the systems and methods are described herein with reference to the related drawings. Alternative embodiments can be devised without departing from the scope of the described concepts. It is noted that various connections and positional relationships (e.g., over, below, adjacent, etc.) are set forth between elements in the following description and in the drawings. These connections and/or positional relationships, unless specified otherwise, can be direct or indirect, and the present invention is not intended to be limiting in this respect. Accordingly, a coupling of entities can refer to either a direct or an indirect coupling, and a positional relationship between entities can be a direct or indirect positional relationship. As an example of an indirect positional relationship, references in the present description to element or structure A over element or structure B include situations in which one or more intermediate elements or structures (e.g., element C) is between elements A and B regardless of whether the characteristics and functionalities of elements A and/or B are substantially changed by the intermediate element(s).

Furthermore, it should be appreciated that relative, directional or reference terms (e.g. such as "above," "below," "left," "right," "top," "bottom," "vertical," "horizontal," "front," "back," "rearward," "forward," etc.) and derivatives thereof are used only to promote clarity in the description of the figures. Such terms are not intended as, and should not be construed as, limiting. Such terms may simply be used to facilitate discussion of the drawings and may be used, where applicable, to promote clarity of description when dealing with relative relationships, particularly with respect to the illustrated embodiments. Such terms are not, however, intended to imply absolute relationships, positions, and/or orientations. For example, with respect to an object or structure, an "upper" or "top" surface can become a "lower" or "bottom" surface simply by turning the object over. Nevertheless, it is still the same surface and the object remains the same. Also, as used herein, "and/or" means "and" or "or," as well as "and" and "or." Moreover, all patent and non-patent literature cited herein is hereby incorporated by references in their entirety.

The terms "disposed over," "overlying," "atop," "on top," "positioned on" or "positioned atop" mean that a first element, such as a first structure, is present on a second element, such as a second structure, where intervening elements or structures (such as an interface structure) may or may not be present between the first element and the second element. The term "direct contact" means that a first element, such as a first structure, and a second element, such as a second structure, are connected without any intermediary elements or structures between the interface of the two elements. The term "connection" can include an indirect connection and a direct connection.

In the foregoing detailed description, various features are grouped together in one or more individual embodiments for the purpose of streamlining the disclosure. This method of disclosure is not to be interpreted as reflecting an intention that each claim requires more features than are expressly recited therein. Rather, inventive aspects may lie in less than all features of each disclosed embodiment.

References in the disclosure to "one embodiment," "an embodiment," "some embodiments," or variants of such phrases indicate that the embodiment(s) described can include a particular feature, structure, or characteristic, but every embodiment can include the particular feature, structure, or characteristic. Moreover, such phrases are not necessarily referring to the same embodiment(s). Further, when a particular feature, structure, or characteristic is described with reference to one embodiment, knowledge of one skilled in the art may be relied upon to affect such feature, structure, or characteristic in connection with other embodiments whether or not explicitly described.

The disclosed subject matter is not limited in its application to the details of construction and to the arrangements of the components set forth in the following description or illustrated in the drawings. The disclosed subject matter is capable of other embodiments and of being practiced and carried out in various ways. As such, those skilled in the art will appreciate that the conception, upon which this disclosure is based, may readily be utilized as a basis for the designing of other structures, methods, and systems for carrying out the several purposes of the disclosed subject matter. Therefore, the claims should be regarded as including such equivalent constructions insofar as they do not depart from the spirit and scope of the disclosed subject matter.

Although the disclosed subject matter has been described and illustrated in the foregoing exemplary embodiments, it is understood that the present disclosure has been made only by way of example, and that numerous changes in the details of implementation of the disclosed subject matter may be made without departing from the spirit and scope of the disclosed subject matter.

All publications and references cited herein are expressly incorporated herein by reference in their entirety.

**Claims**

1.  A method of identifying an error in measuring a characteristic of a target, comprising:

    receiving, by electronic circuitry, a plurality of signals representative of a magnetic field generated by the target;
    combining, by the electronic circuitry, the plurality of signals to determine a value;
    determining, by the electronic circuitry, whether the value is an expected value; and
    outputting, by the electronic circuitry, an output signal representing an error when the value is not the expected value.

2.  The method of claim 1, wherein the plurality of signals comprises three signals, wherein a first signal of the plurality of signals is a first channel ($CH_1$) signal representing signals output from a first pair of differentially coupled magnetic field sensing elements, a second signal of the plurality of signals is a second channel ($CH_2$) signal representing signals output from a second pair of differentially coupled magnetic field sensing elements, and a third signal of the plurality of signals is a third channel ($CH_3$) signal representing signals output from a third pair of differentially coupled magnetic field sensing elements.

3.  The method of claim 2, wherein combining the plurality of signals to determine the value comprises combining the plurality of signals according to the formula

$$CH_1 - CH_2 + CH_3 = X1$$

    where X1 is the value and is expected to be zero.

4.  The method of claim 3, wherein determining whether the value is the expected value comprises determining whether X1 is above a threshold value for a predetermined time.

5.  The method of claim 2, wherein combining the plurality of signals to determine the value comprises combining the plurality of signals according to the formula

$$CH_1{}^2 + CH_2{}^2 + CH_3{}^2 = X2$$

    where X2 is the value and is expected to be constant over time.

6.  The method of claim 2, wherein combining the plurality of signals to determine the value comprises combining the plurality of signals according to the formula

$$B_{IN} = \frac{1}{3} \times \sqrt{\left(\frac{\sqrt{3}}{2}(CH_2 + CH_3)\right)^2 + \left(CH_1 + \frac{1}{2}(CH_2 - CH_3)\right)^2}$$

where $B_{IN}$ is the value and is proportional to a magnitude of the magnetic field generated by the target.

7. A system comprising electronic circuitry configured to:

  receive a plurality of signals representative of a magnetic field generated by a target;
  combine the plurality of signals to determine a value;
  determine whether the value is an expected value; and
  output an output signal representing an error when the value is not the expected value.

8. The system of claim 7, further comprising at least six magnetic field sensing elements.

9. The system of claim 8, wherein the magnetic field sensing elements are Hall-effect plate sensing elements.

10. The system of claim 8, wherein the at least six magnetic field sensing elements comprise three pairs of differentially coupled magnetic field sensing elements.

11. The system of claim 7, or the method of claim 1, wherein the plurality of signals represents signals output from differentially coupled pairs of magnetic field sensing elements.

12. The system of claim 7, or the method of claim 1, wherein the plurality of signals comprises three signals, each of the three signals being a channel signal representing signals output from a differentially coupled pair of magnetic field sensing elements.

13. The system of claim 7, wherein the plurality of signals comprises three signals, wherein a first signal of the plurality of signals is a first channel ($CH_1$) signal representing signals output from a first pair of differentially coupled magnetic field sensing elements, a second signal of the plurality of signals is a second channel ($CH_2$) signal representing signals output from a second pair of differentially coupled magnetic field sensing elements, and a third signal of the plurality of signals is a third channel ($CH_3$) signal representing signals output from a third pair of differentially coupled magnetic field sensing elements.

14. The system of claim 13, wherein combining the plurality of signals to determine the value comprises combining the plurality of signals according to the formula

$$CH_1 - CH_2 + CH_3 = X1$$

where X1 is the value and is expected to be zero.

15. The system of claim 14, wherein determining whether the value is the expected value comprises determining whether X1 varies beyond a threshold amount for a predetermined time.

16. The system of claim 13, wherein combining the plurality of signals to determine the value comprises combining the plurality of signals according to the formula

$$CH_1{}^2 + CH_2{}^2 + CH_3{}^2 = X2$$

where X2 is the value and is expected to be constant over time.

17. The system of claim 16, or the method of claim 5, wherein determining whether the value is the expected value comprises determining whether X2 varies beyond a threshold amount for a predetermined time.

18. The system of claim 13, wherein combining the plurality of signals to determine the value comprises combining the plurality of signals according to the formula

$$B_{IN} = \frac{1}{3} \times \sqrt{\left(\frac{\sqrt{3}}{2}(CH_2 + CH_3)\right)^2 + \left(CH_1 + \frac{1}{2}(CH_2 - CH_3)\right)^2}$$

where $B_{IN}$ is the value and is proportional to a magnitude of the magnetic field generated by the target.

19. The system of claim 18, or the method of claim 6, wherein determining whether the value is the expected value comprises determining whether $B_{IN}$ deviates from an expected $B_{IN}$ for a predetermined time.

20. The system of claim 7, wherein the electronic circuitry further comprises voltage adder circuitry, the voltage adder circuitry combining the plurality of signals to determine the value.

21. The system of claim 20, wherein the voltage adder circuitry comprises one or more of an operational amplifier circuit, a switched capacitor circuit, or a current mirror circuit.

22. The system of claim 7, wherein the electronic circuitry further comprises module calculation circuitry, the module calculation circuitry combining the plurality of signals to determine the value.

23. The system of claim 22, wherein the module calculation circuitry comprises one or more of a voltage multiplier circuit, a Gilbert cell circuit, an analog-to-digital conversion circuit, or a digital signal processing circuit.

24. The system of claim 7, wherein the electronic circuitry further comprises:

    a memory storing instructions; and
    a processor that, when executing the instructions, is configured to:

        receive the plurality of signals;
        combine the plurality of signals to determine the value;
        determine whether the value is the expected value; and
        output the output signal representing the error when the value is not the expected value.

25. The system of claim 7, or the method of claim 1, wherein combining the plurality of signals to determine the value comprises summing the plurality of signals.

26. The system of claim 7, or the method of claim 1, wherein determining whether the value is an expected value comprises determining whether the value is within a threshold amount of zero for a predetermined time.

27. The system of claim 7, or the method of claim 1, wherein determining whether the value is an expected value comprises determining whether the value is within a threshold amount of a constant value for a predetermined time.

**FIG. 1**

**FIG. 2**

FIG. 3A    FIG. 3B    FIG. 3C

EP 4 741 771 A1

FIG. 4

*FIG. 5A*

500

502

520

522

501 Rotating Target

Driver 514A

509A
510A
509B

Channel
Path 1
516A

Channel 1

535 Channel 1

Output
processing
block A
518A

541 Output A

Driver 514B

509C
510B
509D

Channel
Path 2
516B

Channel 2

537 Channel 2

Output
processing
block B
518B

543 Output B

Driver 514C

509E
510C
509F

Channel
Path 3
516C

Channel 3

539 Channel 3

*FIG. 5B*

EP 4 741 771 A1

**FIG. 6**

EP 4 741 771 A1

700

**FIG. 7**

800

802

Memory
815

Monitor 1 Calculator
811

Monitor 2 Calculator
812

Monitor 3 Calculator
813

ADCs
805

Controller
810

## FIG. 8A

850

870

501

Rotating Target

Sensing
Circuitry
502

Monitoring
Circuitry
853

Error
Condition
Detecting
Circuitry
855

Output
Circuitry
860

## FIG. 8B

900

Receive signals representing a
magnetic field generated by a target

910

Combine the signals

920

Combination
of signals yield
expected value?

930

Yes

No

Output signal representing error

940

# FIG. 9

1000

**FIG. 10**

1100

**FIG. 11**

# EUROPEAN SEARCH REPORT

**Application Number**

EP 25 20 7364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/245677 A1 (COSGRAVE GAVIN PATRICK [IE] ET AL) 25 August 2016 (2016-08-25) * Abstract, Desc. [0003], [0007], [0012], [0032]-[0056], Figs. 1A-1C, 2A-2D * | 1-24,26, 27 | INV. G01D5/14 G01D3/08 |
| X | US 2023/152125 A1 (PARK JOO IL [KR] ET AL) 18 May 2023 (2023-05-18) | 1,2,7, 11-13, 25-27 | |
| A | * Abstract, Desc. [0002], [0025]-[0060], [0066], [0081], Figs. 1-4, 7 * | 3-6, 14-19 | |
| X | US 2016/245893 A1 (COSGRAVE GAVIN PATRICK [IE] ET AL) 25 August 2016 (2016-08-25) | 1,2, 7-13, 22-24, 26,27 | |
| A | * Abstract, Desc. [0027]-[0049], Figs. 1-3 * | 3-6, 14-19 | |
| X | US 2021/055130 A1 (LEISENHEIMER STEPHAN [DE] ET AL) 25 February 2021 (2021-02-25) | 1,7-9, 11, 22-24, 26,27 | **TECHNICAL FIELDS SEARCHED (IPC)** |
| A | * Abstract, Desc. [0001], [0027], [0037]-[0041], [0055]-[0057], Figs. 2, 3A * | 3-6, 14-19 | G01D |

The present search report has been drawn up for all claims

| Place of search | Date of completion of the search | Examiner |
|---|---|---|
| Munich | 16 March 2026 | Reim, Klaus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 4 741 771 A1

## ANNEX TO THE EUROPEAN SEARCH REPORT
## ON EUROPEAN PATENT APPLICATION NO.

EP 25 20 7364

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2026

| Patent document cited in search report | | Publication date | Patent family member(s) | | Publication date |
|---|---|---|---|---|---|
| US 2016245677 | A1 | 25-08-2016 | CN | 105910637 A | 31-08-2016 |
| | | | DE | 102016102927 A1 | 25-08-2016 |
| | | | GB | 2538342 A | 16-11-2016 |
| | | | US | 2016245677 A1 | 25-08-2016 |
| US 2023152125 | A1 | 18-05-2023 | CN | 116136386 A | 19-05-2023 |
| | | | DE | 102021212873 A1 | 17-05-2023 |
| | | | US | 2023152125 A1 | 18-05-2023 |
| US 2016245893 | A1 | 25-08-2016 | CN | 105910528 A | 31-08-2016 |
| | | | DE | 102016102929 A1 | 25-08-2016 |
| | | | GB | 2538343 A | 16-11-2016 |
| | | | US | 2016245893 A1 | 25-08-2016 |
| US 2021055130 | A1 | 25-02-2021 | CN | 112393747 A | 23-02-2021 |
| | | | DE | 102020121463 A1 | 25-02-2021 |
| | | | US | 2021055130 A1 | 25-02-2021 |

EPO FORM P0459

For more details about this annex : see Official Journal of the European Patent Office, No. 12/82

**EP 4 741 771 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9797746 B
- US 11733024 B